# EUROPÄISCHE PATENTSCHRIFT

(11) **EP 3 629 878 B1**
(45) Veröffentlichungstag und Bekanntmachung des Hinweises auf die Patenterteilung: **01.09.2021**
(21) Anmeldenummer: 18725235.8
(22) Anmeldetag: 18.05.2018
(51) Int. Cl.: A47L 15/42, D06F 39/00

(54) **REINIGUNGSGERÄT UND VERFAHREN ZUM BETRIEB EINES REINIGUNGSGERÄTS**
CLEANING DEVICE AND METHOD FOR OPERATING A CLEANING DEVICE
APPAREIL DE NETTOYAGE ET PROCÉDÉ DE FONCTIONNEMENT D'UN APPAREIL DE NETTOYAGE

(30) Priorität: 23.05.2017 DE 102017111187; 01.09.2017 DE 102017120163; 01.09.2017 DE 102017120157; 01.09.2017 DE 102017120171; 12.03.2018 DE 102018105641
(43) Veröffentlichungstag der Anmeldung: 08.04.2020
(73) Patentinhaber: Miele & Cie. KG, 33332 Gütersloh (DE)
(72) Erfinder: BERTRAM, Andre, 33739 Bielefeld (DE); DAHMS, Tobias, 30519 Hannover (DE); STEINMEIER, Ralph, 32052 Herford (DE); NIERLING, Andreas, 49326 Melle (DE); SGURSKI, Eugen, 33649 Bielefeld (DE); DETTMER, Martin, 33607 Bielefeld (DE); REILMANN, Michael, 33659 Bielefeld (DE); KORNFELD, André, 33378 Rheda-Wiedenbrück (DE)
(86) Internationale Anmeldenummer: PCT/EP2018/063116
(87) Internationale Veröffentlichungsnummer: WO 2018/215343

(56) Entgegenhaltungen:
- EP-A1- 2 471 434
- EP-A2- 1 864 603
- EP-A2- 2 193 741
- CH-A2- 699 692
- DE-A1- 10 357 642
- DE-A1-102015 203 532

## Beschreibung

Die Erfindung betrifft ein Verfahren zum Betrieb eines Reinigungsgeräts, insbesondere einer Wasch- oder Geschirrspülmaschine, mit einem einen Reinigungsraum, insbesondere Spülraum bereitstellenden Reinigungsbehälter, insbesondere Spülbehälter und einer Wärmepumpeneinrichtung, die einen innerhalb eines Wärmespeichermediumtanks angeordneten Verdampfer aufweist. Ferner betrifft die Erfindung ein Reinigungsgerät, insbesondere eine Wasch- oder Geschirrspülmaschine, insbesondere eine Haushaltsgeschirrspülmaschine, mit einem einen Reinigungsraum bereitstellenden Reinigungsbehälter und einer Wärmepumpeneinrichtung, die einen innerhalb eines Wärmespeichermediumtanks angeordneten Verdampfer aufweist.

Ein gattungsgemäßes Reinigungsgerät ist aus der EP 3 141 176 A1 bekannt.

Die darin beschriebene Geschirrspülmaschine verfügt über einen Spülbehälter, der einen Spülraum bereitstellt. Dieser ist verwenderseitig über eine Beschickungsöffnung zugänglich, die mittels einer verschwenkbar gelagerten Spülraumtür fluiddicht verschließbar ist. Im bestimmungsgemäßen Verwendungsfall dient der Spülbehälter der Aufnahme von zu reinigendem Spülgut, bei dem es sich beispielsweise um Geschirr, Besteckteile und/oder dgl. handeln kann.

Zur Beaufschlagung von zu reinigendem Spülgut mit Spülflüssigkeit, der sogenannten Spülflotte, verfügt die Geschirrspülmaschine im Innenraum des Spülbehälters über eine Sprüheinrichtung. Diese Sprüheinrichtung stellt typischerweise verdrehbar gelagerte Sprüharme zur Verfügung, wobei in der Regel zwei oder drei solcher Sprüharme vorgesehen sind. Im bestimmungsgemäßen Verwendungsfall erfolgt eine Beaufschlagung des zu reinigenden Spülgutes mit Spülflotte mittels sich drehender Sprüharme.

Die von der Sprüheinrichtung im Betriebsfall abgegebene Spülflotte trifft auf das zu reinigende Spülgut und sammelt sich alsdann in einem Sammeltopf des Spülbehälters an. Der Sammeltopf ist an eine Umwälzpumpe einerseits und an eine Ablaufpumpe andererseits angeschlossen. Zur Beaufschlagung der Sprüheinrichtung mit Spülflotte dient die Umwälzpumpe, die im bestimmungsgemäßen Verwendungsfall die in die Geschirrspülmaschine eingeförderte Spülflüssigkeit umwälzt. Mit Abschluss eines Spülprogramms wird die Spülflotte mittels der Ablaufpumpe verworfen und abgepumpt.

Geschirrspülmaschinen können bekanntermaßen mit einer Wärmepumpeneinrichtung ausgestattet sein, um den Energieverbrauch insbesondere bei einem Aufheizen der Spülflotte zu reduzieren.

Die aus der EP 3 141 176 A1 bekannte Geschirrspülmaschine verfügt über eine sogenannte Wasser-Wasser-Wärmepumpeneinrichtung. Im bestimmungsgemäßen Verwendungsfall wird mit einer solchen Wärmepumpeneinrichtung einem Flüssigkeitsreservoir Wärmeenergie entzogen. Die EP 3 141 176 A1 sieht zu diesem Zweck einen offenen Wassertank vor, der den Verdampfer der Wärmepumpeneinrichtung beherbergt. Im Betriebsfall kommt es infolge eines Wärmeenergieentzugs zu einer Abkühlung des im Tank als Wärmeträgermedium bevorrateten Wassers. Eine solche Abkühlung kann bis zur Vereisung des Wassers vorgenommen werden.

Von grundsätzlicher Problematik bei der Verwendung einer Wasser-Wasser-Wärmepumpeneinrichtung ist, dass ein bestimmungsgemäßer Einsatz der Geschirrspülmaschine unter gleichzeitiger Nutzung der Wärmepumpeneinrichtung energetisch nur dann sinnvoll ist, wenn das im Wassertank bevorratete und als Wärmeträgermedium dienende Wasser eine gewisse Mindesttemperatur aufweist. Sollte das Wasser nach einer vorangegangenen Geschirrspülmaschinenbenutzung noch zu kühl oder sogar gefroren sein, muss mit einem bestimmungsgemäßen Einsatz der Wärmepumpeneinrichtung bis zum Erreichen der Mindesttemperatur des Wassers gewartet werden, was bei noch gefrorenem Wasser durchaus 24 Stunden in Anspruch nehmen kann. Eine bestimmungsgemäße Verwendung der Geschirrspülmaschine unter Einsatz der Wärmepumpeneinrichtung ist mithin pro Tag nur einmal möglich.

Um diesem Problem zu begegnen, ist mit der EP 3 141 176 A1 unter anderem vorgeschlagen worden, innerhalb des Wassertanks einen Wärmetauscher anzuordnen. Dieser Wärmetauscher ist strömungstechnisch an den Spülraum angeschlossen, so dass zum Ende eines Spülprogramms noch warme Spülflotte durch den Wärmetauscher gepumpt werden kann, bevor sie zur Beendigung des Spülprogramms durch Abpumpen verworfen wird. Der Wärmetauscher erlaubt mithin eine Energierückführung aus der noch warmen, aber nicht mehr benötigten Spülflotte auf das im Tank bevorratete Wasser.

Die EP 1 864 603 A2 offenbart eine Geschirrspülmaschine mit einem einen Spülraum bereitstellenden Spülbehälter, der der Aufnahme von zu reinigendem Spülgut dient, und einer Wärmepumpeneinrichtung, die einen innerhalb des Solebehälters einer Wasserentkalkungsvorrichtung angeordneten Verdampfer aufweist.

Die DE 10 2015 203 532 A1 offenbart eine Geschirrspülmaschine mit einem einen Spülraum bereitstellenden Spülbehälter, der der Aufnahme von zu reinigendem Spülgut dient, und einer Wärmepumpeneinrichtung, die einen innerhalb eines Füllreservoirs angeordneten Verdampfer aufweist. Das Füllreservoir weist dabei zu seinem für flüssiges Frischwasser vorgegebenem Soll-Füllvolumen einen Leerraum auf, in den sich während des Betriebs der Wärmepumpeneinrichtung gebildetes Eiswasser/Eis aufgrund seines Volumenzuwachses ausdehnen kann.

Ausgehend davon ist es die **Aufgabe** der Erfindung, ein Reinigungsgerät vorzuschlagen, das vergleichsweise einfach, platzsparend und wartungsarm ist und gleichzeitig einen energetisch effektiven Betrieb des Reinigungsgeräts gestattet.

Zur **Lösung** dieser Aufgabe wird mit der Erfindung ein Reinigungsgerät sowie ein Verfahren zum Betrieb eines Reinigungsgeräts mit den Merkmalen der unabhängigen Ansprüche vorgeschlagen. Vorteilhafte Ausführungsbeispiele sind in den abhängigen Ansprüchen angegeben.

Bei dem Reinigungsgerät kann es sich um ein wasserführendes Haushaltsgerät handeln, wie etwa um eine Waschmaschine, vorzugsweise jedoch um eine Geschirrspülmaschine. Das Reinigungsgerät umfasst einen einen Reinigungsraum, beispielsweise einen Spülraum, bereitstellenden Reinigungsbehälter, der der Aufnahme von zu reinigendem Reinigungsgut, insbesondere Spülgut, dient, sowie eine Wärmepumpeneinrichtung, die einen innerhalb eines Wärmespeichermediumtanks angeordneten Verdampfer aufweist. Darüber hinaus weist das Reinigungsgerät einen Zwischenspeicher auf. Dieser dient zur Aufnahme von aus dem Wärmespeichermediumtank verdrängtem flüssigem Wärmespeichermedium. Der Zwischenspeicher ist in Betriebsstellung des Reinigungsgeräts in Schwerkraftrichtung vorzugsweise oberhalb des Wärmespeichermediumtanks angeordnet.

Im Betriebsfall der Wärmepumpeneinrichtung kommt es infolge eines Wärmeenergieentzugs zu einer Abkühlung des im Wärmespeichermediumtank bevorrateten Wärmespeichermediums, bei dem es sich beispielsweise um Wasser handeln kann. Die Abkühlung wird dabei typischerweise bis zum zumindest teilweisen Erstarren, z.B. zur zumindest teilweisen Vereisung des Wärmespeichermediums im Wärmespeichermediumtank vorgenommen, d.h. bis zu einem Zeitpunkt, bei dem zumindest eine Teilmenge des Wärmespeichermediums im Wärmespeichermediumtank sich in erstarrtem, z.B. gefrorenem Zustand befindet. Die zumindest teilweise Erstarrung bzw. Vereisung bewirkt eine Volumenvergrößerung des Inhalts des Wärmespeichermediumtanks. Der erfindungsgemäße Zwischenspeicher ist dazu eingerichtet, eine Teilmenge des Wärmespeichermediumtankinhalts, welche Teilmenge durch die Volumenvergrößerung des Wärmespeichermediums aus dem Wärmespeichermediumtank verdrängt wird, aufzunehmen.

Hierdurch kann der Wärmespeichermediumtank besonders kompakt, einfach und dennoch betriebssicher ausgeführt sein. Der Wärmespeichermediumtank kann insbesondere vollständig mit dem Wärmespeichermedium gefüllt sein, ohne dass ein Platzen des Tanks aufgrund der Volumenvergrößerung bei einer Erstarrung oder Vereisung des Tankinhalts zu befürchten ist. Der innerhalb des Gehäuses des Reinigungsgeräts zur Verfügung stehende Bauraum, welcher insbesondere bei Geschirrspülmaschinen äußerst begrenzt ist, kann somit besonders effizient genutzt werden. Dabei sind außerdem keine erhöhten Materialanforderungen bei der Herstellung des Wärmespeichermediumtanks zu beachten. Auch auf Sensormittel im Wärmespeichermediumtank, insbesondere auf eine Füllstandssensierung im Wärmespeichermediumtank, kann verzichtet werden. Darüber hinaus geschieht die Überführung des Wärmespeichermediums aus dem Wärmespeichermediumtank in den Zwischenspeicher pumpenlos; es ist keine Pumpe erforderlich oder vorhanden, um das Wärmespeichermedium aus dem Wärmespeichermediumtank in den Zwischenspeicher zu überführen; die Verdrängung von Wärmespeichermedium in den Zwischenspeicher wird allein durch die Volumenvergrößerung des Wärmespeichermediums bewirkt.

Gemäß einem weiteren Merkmal der Erfindung ist der Wärmespeichermediumtank unterhalb des Reinigungsbehälters, etwa im Sockelbereich des Reinigungsgeräts, insbesondere im Sockelbereich der Geschirrspülmaschine angeordnet.

Gemäß einem weiteren Merkmal der Erfindung ist der Zwischenspeicher seitlich des Reinigungsbehälters oder zumindest größtenteils seitlich des Reinigungsbehälters angeordnet, insbesondere im Spaltraum zwischen Reinigungsbehälter und dem Gehäuse des Reinigungsgeräts. Hierdurch wird eine besonders platzsparende und den geringfügigen Freiraum innerhalb des Gehäuses bestmöglich ausnutzende Anordnung des Zwischenspeichers realisiert. Der Zwischenspeicher ist dabei insbesondere oberhalb des Wärmespeichermediumtanks, der sich unterhalb des Reinigungsbehälters befindet, angeordnet. Wärmespeichermediumtank und Zwischenspeicher sind somit vorzugsweise so relativ zueinander angeordnet, dass Wärmespeichermedium aus dem Zwischenspeicher schwerkraftbedingt in den Wärmespeichermediumtank fließen kann. Insbesondere kann somit Wärmespeichermedium, welches - insbesondere infolge einer im Wärmespeichermediumtank eintretenden Vereisung - aus dem Wärmespeichermediumtank verdrängt wurde und in den Zwischenspeicher gelangt ist, der Schwerkraft folgend wieder in den Wärmespeichermediumtank zurückfließen, wenn bzw. sobald es der Füllstand des Wärmespeichermediumtanks zulässt, etwa nachdem im Wärmespeichermediumtanks gebildetes Eis sich durch Erwärmung wieder verflüssigt.

Gemäß einem weiteren Merkmal ist das Wärmespeichermedium als Wasser, insbesondere Frischwasser, und der Wärmespeichermediumtank als Wassertank ausgebildet. Dies ermöglicht eine vergleichsweise einfache, preiswerte Konstruktion und hohe Betriebssicherheit. Es ist darüber hinaus vergleichsweis einfach möglich, den Wärmespeichermediumtank bei Bedarf aus dem Frischwassernetz wiederaufzufüllen.

Der Wärmespeichermediumtank hat vorzugsweise ein Volumen von 3 bis 7 Liter, vorzugsweise ein Volumen von 3,5 bis 5,5 Liter. Im Betrieb des Reinigungsgeräts ist der Wärmespeichermediumtank, insbesondere auch bei Raumtemperatur, vorzugsweise zumindest nahezu vollständig befüllt. Anders ausgedrückt ist der Wärmespeichermediumtank vorzugsweise mit einem Wärmespeichermediumvolumen befüllt, welches dem Volumen des Wärmespeichermediumtanks entspricht oder diesem zumindest nahezu entspricht. Der Zwischenspeicher weist ein Volumen zwischen 50 und 550 Milliliter, insbesondere ein Volumen zwischen 250 und 450 Milliliter auf, und/oder ein Volumen, welches 5 bis 15 % des Volumens des Wärmespeichermediumtanks entspricht. Dabei ist seine Ausdehnung in Breitenrichtung des Reinigungsgeräts um ein Vielfaches kleiner als seine Ausdehnung in Höhenrichtung und/oder als in Tiefenrichtung des Reinigungsgeräts. Die Ausdehnung in Breitenrichtung des Reinigungsgeräts beträgt insbesondere weniger als 25mm, vorzugsweise 5 bis 15 mm.

Gemäß einem Ausführungsbeispiel eines Geschirrspülers beträgt das Volumen des als Wassertank ausgebildeten Wärmespeichermediumtanks vorzugsweise das 1 bis 3-fache, insbesondere 1,25-fache bis 1,75-fache, besonders bevorzugt ca. das 1,5-fache der Wassermenge eines Spülprogrammabschnitts, insbesondere des Spülprogrammabschnitts REINIGEN. Diese kann beispielsweise etwa 3 Liter betragen.

Wärmespeichermediumtank und Zwischenspeicher können über eine rohr- oder schlauchförmige Leitung miteinander verbunden sein, im Folgenden als Verdrängungsleitung bezeichnet. Wärmespeichermediumtank und Zwischenspeicher können aber auch einstückig ausgebildet sein und somit ein Bevorratungsbehältnis gemeinschaftlich ausbilden. Vorzugsweise ist dabei das gemeinschaftliche Bevorratungsbehältnis so ausgebildet, dass der Wärmespeichermediumtank unterhalb des Reinigungsbehälters angeordnet ist und der Zwischenspeicher seitlich des Reinigungsbehälters oder zumindest größtenteils seitlich des Reinigungsbehälters, insbesondere im Spaltraum zwischen Reinigungsbehälter und dem Gehäuse des Reinigungsgeräts angeordnet ist.

Gemäß einem Ausführungsbeispiel der Erfindung bilden der Wärmespeichermediumtank und der Zwischenspeicher gemeinsam ein geschlossenes System. Unter einem geschlossenen System ist hier ein System zu verstehen, dessen Inhalt bei normalem Betrieb des Reinigungsgeräts, also insbesondere bei einem vom Benutzer auswählbarem Reinigungsprogramm zur Reinigung von Reinigungsgut nicht gewechselt wird. Gemäß einem weiteren Merkmal weist das Reinigungsgerät keine strömungstechnische Verbindung, insbesondere Wasserleitung, zwischen dem insbesondere als Wassertank ausgebildeten Wärmespeichermediumtank oder dem Zwischenspeicher einerseits und dem Reinigungsbehälter andererseits auf. Eine Überführung von Wärmespeichermedium aus dem Wärmespeichermediumtank oder dem Zwischenspeicher in den Reinigungsbehälter ist somit ausgeschlossen. Folglich geht bis auf eine geringe Verdunstungsmenge kein Wärmespeichermedium verloren. Ein solches System ist besonders robust und wartungsarm und weist einen besonders geringen Montageaufwand auf.

Gemäß einem Merkmal der Erfindung ist der Wärmespeichermediumtank als Wassertank ausgebildet und über einen Frischwasseranschluss des Reinigungsgeräts mit einem hausseitigen Frischwassernetz anschließbar. Dies ermöglicht ein einfaches Nachfüllen des Wassertanks im Bedarfsfall. Das Nachfüllen kann sensorgesteuert automatisch erfolgen.

Ein weiteres Ausführungsbeispiel der Erfindung sieht vor, dass der als Wassertank ausgebildete Wärmespeichermediumtank an einen Frischwasseranschluss einerseits und an eine in den Reinigungsbehälter mündende Überlaufleitung andererseits strömungstechnisch angeschlossen ist. Dies gewährt eine energetisch effiziente Verfahrensführung dadurch, dass dem Reinigungsbehälter vor Beginn einer Reinigungsflottenaufheizung Wasser mit einer höchst möglichen Wassertemperatur zugeführt werden kann. So kann dem Reinigungsbehälter vor Beginn eines, insbesondere ersten Reinigungsprogrammschritts, demgemäß ein Aufheizen der Reinigungsflotte stattfindet, anstelle von Frischwasser, welches ohne es zu bevorraten direkt aus der hausseitigen Wasserversorgungseinrichtung bezogen wurde, im Wassertank der Wärmepumpeneinrichtung bevorratetes Wasser über die Überlaufleitung zugeführt werden. Denn im Unterschied zu Frischwasser, das typischerweise eine Temperatur von ca. 15°C aufweist, kann das im Wassertank der Wärmepumpeneinrichtung bevorratete Wasser Raumtemperatur besitzen, die typischerweise zwischen 20°C und 23°C liegt. Das im Wassertank der Wärmepumpeneinrichtung bevorratete Wasser ist also typischerweise wärmer als Frischwasser, so dass im nachfolgenden Programmschritt des Aufheizens weniger Energie zur Erreichung einer Reinigungsflottenzieltemperatur benötigt wird. Dabei ist der erste Programmschritt eines Reinigungsprogramms, demgemäß ein Aufheizen vom im Reinigungsbehälter befindlicher Reinigungsflotte stattfindet, regelmäßig der erste oder der sich nach einem optionalen Vorspülen anschließende Programmschritt des Reinigens. Der Wassertank dient damit nicht nur als Wärmereservoir für die Wärmepumpeneinrichtung, sondern auch als Vorratsspeicher für zur Überführung in den Reinigungsbehälter vorgesehenes Frischwasser. Auf einen zusätzlichen Vorratsspeicher kann somit verzichtet werden und es bleibt mehr Platz für einen vergrößerten Wassertank.

Gemäß einem weiteren Merkmal kann dabei der Zwischenspeicher in die in den Reinigungsbehälter mündende Überlaufleitung integriert sein. Anders ausgedrückt erfolgt ein Wassereinlass aus dem als Wassertank ausgebildeten Wärmespeichermediumtank in den Reinigungsbehälter unter Zwischenordnung des Zwischenspeichers. Der Zwischenspeicher dient damit in effizienter und raumsparender Weise einerseits zur Aufnahme von aus dem Wassertank verdrängtem Wasser, insbesondere während bzw. aufgrund des Betriebs der Wärmepumpeneinrichtung, und stellt andererseits einen Teil der Überlaufleitung dar, über die Wasser aus dem Wassertank in den Reinigungsbehälter eingelassen werden kann. Auch hierdurch ist eine besonders kompakte Konstruktion realisiert.

Gemäß einem weiteren Ausführungsbeispiel ist der als Wassertank ausgebildete Wärmespeichermediumtank unter strömungstechnischer Zwischenschaltung des Zwischenspeichers an eine Frischwasserzufuhr angeschlossen. Der Wassertank kann somit auch bei diesem Ausführungsbeispiel in einfacher Weise bei Bedarf mit Frischwasser aufgefüllt werden. Der Zwischenspeicher ist dabei in effizienter und raumsparender Weise zwischen Frischwasserzufuhr und Wassertank, bzw. eingangsseitig des Wassertanks angeordnet. Auch bei diesem Ausführungsbeispiel kann der Wassertank an eine in den Reinigungsbehälter mündende Überlaufleitung strömungstechnisch angeschlossen sein.

Gemäß einem weiteren Merkmal der Erfindung weist der, vorzugsweise im Spaltraum zwischen Reinigungsbehälter und dem Gehäuse des Reinigungsgeräts angeordnete Zwischenspeicher auf seiner dem Reinigungsbehälter zugewandten Seite eine Isolierung auf. Diese verhindert oder minimiert eine ungewollte Abkühlung des Reinigungsbehälters durch den Zwischenspeicher, insbesondere wenn dieser mit dem während des Wärmepumpenbetrieb aufgrund der Erstarrung bzw. Vereisung des Inhalts des Wärmespeichermediumtanks aus dem Wärmespeichermediumtank verdrängtem kalten Wärmespeichermedium befüllt ist. Effizienzeinbußen werden somit vermieden. Die Isolierung kann durch eine am Zwischenspeicher oder dem Reinigungsbehälter angebrachte Dämmschicht realisiert sein. Sie kann auch durch einen zwischen Reinigungsbehälter und Zwischenspeicher angeordneten Luftspalt, also eine beabstandete Anordnung von Reinigungsbehälter und Zwischenspeicher realisiert sein. Dies sorgt für eine thermische Entkopplung von Reinigungsraum und Zwischenspeicher. Der Luftspalt kann gemäß einem weiteren Merkmal abgedichtet ausgebildet sein, so dass ein Luftstrom in den Luftspalt hinein und aus dem Luftspalt hinaus vermieden wird.

Alternativ liegt der Zwischenspeicher mit seiner dem Reinigungsbehälter zugewandten Seite flächig an diesem an, ist also gerade wärmeleitend mit diesem verbunden. Dadurch kann der nach Betrieb der Wärmepumpe mit kühlem Wärmespeichermedium gefüllte Zwischenspeicher eine Kondensationstrocknung innerhalb des Reinigungsraums unterstützen; andererseits wird dadurch das Wärmespeichermedium im Zwischenspeicher vorteilhafterweise besonders effektiv erwärmt. Hierdurch wird auch ein beschleunigtes Erwärmen des Wärmespeichermediumtanks bewirkt und dadurch ein frühe Wiedereinsetzbarkeit der Wärmepumpe erreicht.

Gemäß einem weiteren Merkmal der Erfindung weist der Zwischenspeicher auf seiner dem Reinigungsbehälter abgewandten Seite keine Isolierung auf, ist also isolierungsfrei. Stattdessen ist der Zwischenspeicher vorzugsweise wärmeleitend mit dem Gehäuse des Reinigungsgeräts verbunden. Dies unterstützt eine Wärmeübertragung aus der Umgebung des Reinigungsgeräts auf das vom Zwischenspeicher aufgenommene Wärmespeichermedium. Wie bereits beschrieben kommt es im Betriebsfall der Wärmepumpeneinrichtung infolge eines Wärmeenergieentzugs mittels des im Wärmespeichermediumtank angeordneten Verdampfers zu einer Abkühlung und zu einer teilweisen Erstarrung bzw. Vereisung und einer damit einhergehenden Volumenvergrößerung des im Wärmespeichermediumtank bevorrateten Wärmeträgermediums, wodurch eine Teilmenge des Wärmeträgermediums aus dem Wärmespeichermediumtank verdrängt wird und in den Zwischenspeicher gelangt. Diese Teilmenge fließt der Schwerkraft folgend sukzessive wieder in den Wärmespeichermediumtank zurück, wenn bzw. sobald es der Füllstand des Wärmespeichermediumtanks zulässt, etwa nachdem Eis im Wärmespeichermediumtank sich wieder verflüssigt. Der erhöhte Wärmeeintrag, den die im Zwischenspeicher zwischengespeicherte Teilmenge des Wärmeträgermediums aufgrund der fehlenden Isolation auf der dem Reinigungsbehälter abgewandten Seite bzw. der wärmeleitenden Verbindung zum Gehäuse des Reinigungsgeräts aus der Umgebung des Reinigungsgeräts erfahren hat, führt somit zu einer beschleunigten Wiedererwärmung des Wärmespeichermediumtankinhalts. Dadurch ist die Wärmepumpeneinrichtung bereits zu einem früheren Zeitpunkt wieder effizient betreibbar.

Alternativ weist der Zwischenspeicher auf seiner dem Reinigungsbehälter abgewandten Seite dagegen eine Isolierung auf, die entweder am Zwischenspeicher oder an der Innenwand des Gehäuses des Reinigungsgeräts angebracht sein kann. Die Isolierung kann auch durch einen zwischen Gehäusewand und Zwischenspeicher angeordneten Luftspalt, also eine beabstandete Anordnung von Gehäusewand und Zwischenspeicher realisiert sein. Dadurch wird ein Betauungsrisiko an der Gehäusewand vermieden.

Verfahrensseitig wird gemäß der Erfindung vorgeschlagen, dass in einem Programmschritt eines Reinigungsprogramms ein im Wärmespeichermediumtank bevorratetes flüssiges Wärmespeichermedium durch Betrieb der Wärmepumpeneinrichtung so stark abgekühlt wird, dass dadurch eine Teilmenge des Wärmespeichermediums aus dem Wärmespeichermediumtank in einen Zwischenspeicher verdrängt wird. Diese Teilmenge fließt zu einem späteren Zeitpunkt, insbesondere in einem nachfolgenden Programmschritt des Reinigungsprogramms oder zumindest teilweise nach Abschluss des Reinigungsprogramms schwerkraftbedingt in den Wärmespeichermediumtank zurück.

Vorzugsweise wird der Vereisungsgrad im Wärmespeichermediumtank ermittelt oder zumindest festgestellt, ob der Vereisungsgrad des Inhalts des Wärmespeichermediumtanks einen vorgegebenen Grenzwert entweder erreicht bzw. überschreitet oder aber diesen Grenzwert unterschreitet. Dies erfolgt insbesondere unmittelbar bei Start eines Reinigungsprogramms und/oder zu Beginn eines Programmschritts mit aufzuheizender Reinigungsflotte, insbesondere eines Programmschritts REINIGEN und/oder eines Programmschritts SPÜLEN eines Spülprogramms für eine Geschirrspülmaschine. Dabei stellt der Vereisungsgrad den Volumenanteil des Wärmespeichermediumtanks dar, in dem das Wärmespeichermedium in fester oder gefrorener Form vorliegt.

Gemäß einem weiteren Merkmal der Erfindung ist im Zwischenspeicher und/oder in der den Wärmespeichermediumtank mit dem Zwischenspeicher verbindende Verdrängungsleitung mindestens ein Füllstandssensor angeordnet. Dieser sensiert den Füllstand im Zwischenspeicher und/oder in der Verdrängungsleitung bzw. sensiert zumindest, ob im Zwischenspeicher und/oder in der Verdrängungsleitung ein bestimmter Füllstand erreicht bzw. überschritten ist oder nicht. Er kann auch so ausgebildet sein, dass mit ihm ein beliebiger Füllstand im Zwischenspeicher oder in der Überlaufleitung messbar ist. Der Füllstandssensor ist mit einer Steuereinrichtung des Reinigungsgeräts verbunden. Abhängig vom Signal des Füllstandssensor wird seitens der Steuereinrichtung vorzugsweise auf einen Vereisungsgrad des Wärmespeichermediumtankinhalts geschlossen oder zumindest festgestellt, ob der Vereisungsgrad des Wärmespeichermediumtankinhalts einen vorgegebenen Grenzwert entweder erreicht bzw. überschreitet oder aber unterschreitet. Somit kann der Vereisungsgrad des Wärmespeichermediums im Wärmespeichermediumtank auf sehr einfache Weise und unter Verzicht eines Sensors im Wärmespeichermediumtank überwacht werden. Der Wärmespeichermediumtank ist dadurch besonders wartungsarm und preiswert herstellbar und die Montage des Reinigungsgeräts vergleichsweise einfach. Insbesondere kann die Steuereinrichtung dazu eingerichtet sein, das Reinigungsprogramm oder ein Reinigungsprogrammparameter abhängig vom Signal des Füllstandssensor zu verändern oder - insbesondere bereits bevor der Benutzer ein Reinigungsprogramm ausgewählt hat - die Menge der vom Benutzer auswählbaren Reinigungsprogramme auf eine vorgegebene Teilmenge davon zu beschränken. Auch kann die Steuereinrichtung dazu eingerichtet sein, in dem Reinigungsprogramm abhängig vom Signal des Füllstandssensor die Wärmepumpeneinrichtung auszuschalten oder ausgeschaltet zu belassen, also auf einen Betrieb der Wärmepumpeneinrichtung in dem Reinigungsprogramm vollständig zu verzichten. In diesem Fall wird die reinigungsprogrammgemäße Erwärmung der Reinigungsflotte ausschließlich mittels einer anderen im Reinigungsgerät enthaltenen Heizeinrichtung bewirkt, etwa einer konventionellen elektrischen Heizeinrichtung, wie einem etwa im Umwälzpumpenkreislauf angeordneten Durchlauferhitzer. Die Steuereinrichtung kann in diesem Fall auch dazu eingerichtet sein, dem Benutzer mittels einer, beispielsweise optischen und/oder akustischen Anzeige den Vereisungsgrad des Wärmespeichermediumtanks bzw. einen den Vereisungsgrad repräsentierenden oder mit diesem korrelierten Parameter oder aber zumindest die vorhandene oder fehlende Betriebsbereitschaft oder aber die, insbesondere bereits erfolgte oder vorgesehene, An- oder Abschaltung der Wärmepumpeneinrichtung mitzuteilen. Die Steuereinrichtung kann alternativ oder darüber hinaus auch dazu eingerichtet sein, abhängig vom Signal des Füllstandssensor eine Zeitdauer oder einen Zeitpunkt zu bestimmen oder abzuschätzen, nach der bzw. ab dem die Wärmepumpe wieder betriebsbereit ist. Insbesondere kann dem Benutzer diese Zeitdauer oder dieser Zeitpunkt mittels einer, beispielsweise optischen oder akustischen Anzeige mitgeteilt werden.

Auch kann die Steuereinrichtung dazu eingerichtet sein, in dem Reinigungsprogramm abhängig vom Signal des Füllstandssensor und/oder abhängig von einem ermittelten Vereisungsgrad im als Wassertank ausgebildeten Wärmespeichermediumtank eine Ventileinrichtung im Bereich des Wassereinlaufs des Reinigungsgeräts zu steuern. Dabei wird die Ventileinrichtung abhängig vom Signal des Füllstandssensor entweder so eingestellt, dass das für einen Wassereinlauf in einem Reinigungsprogrammschritt des Reinigungsprogramms benötigte Frischwasser entweder direkt vom Frischwasseranschluss des Reinigungsgeräts, also unter Umgehung des Wassertanks, in den Reinigungsbehälter eingeleitet wird, oder aber es wird die Ventileinrichtung so eingestellt, dass Frischwasser vom Frischwasseranschluss des Reinigungsgeräts in den Wassertank geleitet wird und das für einen Wassereinlauf in einem Reinigungsprogrammschritt des Reinigungsprogramms benötigte Frischwasser vollständig oder teilweise dem Wassertank entnommen und von dort in den Reinigungsbehälter geführt wird. Dadurch kann das Reinigungsgerät energieeffizienter betrieben werden. Wird mittels des Füllstandssensor erkannt, dass der Wassertank noch vereist bzw. noch zu stark vereist ist, dass also der Vereisungsgrad des Wassertankinhalts einen vorgegebenen Grenzwert erreicht bzw. überschreitet, wird statt des Frischwassers aus dem Wassertank das Frischwasser für einen Wassereinlauf in einem Reinigungsprogrammschritt des Reinigungsprogramms direkt, also unter Umgehung des Wassertanks, von der hausseitigen Wasserversorgungseinrichtung bezogen.

Vorzugsweise ist sowohl im Zwischenspeicher als auch in der Verdrängungsleitung jeweils zumindest ein Füllstandssensor angeordnet oder es sind mehrere Füllstandssensoren im Zwischenspeicher und/oder in der Verdrängungsleitung angeordnet. Hierdurch kann die Steuereinrichtung noch genauere Informationen über den Vereisungsgrad des Wärmespeichermediumtankinhalts ableiten und dadurch das Reinigungsgerät energetisch noch effizienter steuern. Insbesondere dient dabei ein erster Füllstandssensor zur Sensierung, ob im Zwischenspeicher und/oder in der Verdrängungsleitung ein erster Pegel erreicht bzw. überschritten ist oder nicht, und ein zweiter Füllstandssensor dient zur Sensierung, ob im Zwischenspeicher und/oder in der Verdrängungsleitung ein zweiter Pegel erreicht bzw. überschritten ist oder nicht. Die Steuereinrichtung kann dazu eingerichtet sein, in dem Reinigungsprogramm abhängig vom Signal des ersten Füllstandssensor eine erste Maßnahme vorzunehmen und abhängig vom Signal des zweiten Füllstandssensor eine zweite Maßnahme vorzunehmen. Die erste Maßnahme kann darin bestehen, die Wärmepumpeneinrichtung auszuschalten oder ausgeschaltet zu belassen, also auf einen Betrieb der Wärmepumpeneinrichtung in dem Reinigungsprogramm vollständig zu verzichten, wie oben beschrieben. Die zweite Maßnahme kann darin bestehen, eine Einstellung der Ventileinrichtung im Bereich des Wassereinlaufs des Reinigungsgeräts vorzunehmen, insbesondere derart, dass für einen Wassereinlauf in einem Reinigungsprogrammschritt des Reinigungsprogramms benötigte Frischwasser statt aus dem Wassertank direkt von der hausseitigen Wasserversorgungseinrichtung, also unter Umgehung des Wassertanks, zu beziehen.

Der, ein oder mehrere Füllstandssensoren können beispielsweise als Schwimmerschalter, als optische Sensoren oder als Leitwertsensoren ausgebildet sein.

Vorteilhafterweise kann auf die Anordnung eines Sensors, insbesondere eines Temperatursensors im Wärmespeichermediumtank dagegen gänzlich verzichtet werden, wodurch das System vergleichsweise robust und wartungsarm ist.

Gemäß einem weiteren Merkmal der Erfindung weist das Reinigungsgerät eine Tür auf, Mit dieser ist der Reinigungsraum insbesondere fluiddicht verschließbar. Die Tür ist vorzugsweise um eine horizontale Achse verschwenkbar angeordnet. An der Tür kann eine Bedien- und/oder Anzeigeeinrichtung angeordnet sein, welche sich an der Frontseite oder der Stirnseite der Tür befinden kann.

Weitere Merkmale und Vorteile der Erfindung ergeben sich aus der nachfolgenden Beschreibung anhand der Figuren. Dabei zeigen
- Fig. 1 bis 9: jeweils in schematischer Darstellung ein erfindungsgemäß ausgerüstetes Reinigungsgerät in der Ausgestaltung als Geschirrspülmaschine in einer jeweiligen Ausführungsform und
- Fig. 9 bis 12: ein weiteres Ausführungsbeispiel eines erfindungsgemäß ausgerüsteten Reinigungsgeräts in der Ausgestaltung als Geschirrspülmaschine mit Darstellung des erfindungsgemäßen Verfahrensablaufs.

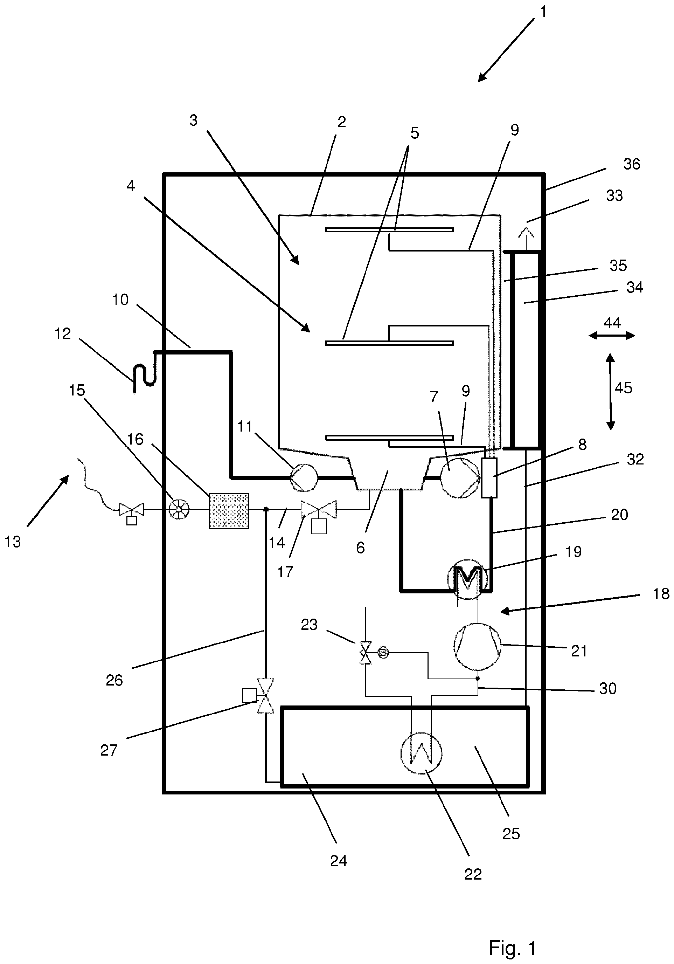

Fig. 1 zeigt schematisch ein erstes Ausführungsbeispiel der Erfindung. Das hier als Geschirrspülmaschine ausgebildete Reinigungsgerät 1 verfügt über ein hier rein schematisch dargestelltes Gehäuse 36, das unter anderem einen als Spülbehälter ausgebildeten Reinigungsbehälter 2 aufnimmt. Der Reinigungsbehälter 2 stellt seinerseits einen Reinigungsraum 3 bereit, der im bestimmungsgemäßen Verwendungsfall der Aufnahme von zu reinigendem Reinigungsgut bzw. Spülgut dient, der sog. Beladung.

Zur Beschickung von zu reinigendem Reinigungsgut mit Reinigungsflotte dient eine Sprüheinrichtung 4, die innerhalb des Spülbehälters 2 angeordnet ist. Bevorzugterweise verfügt eine solche Sprüheinrichtung 4 über ein oder mehrere Sprüharme 5, die jeweils verdrehbar innerhalb des Spülbehälters 2 angeordnet sind.

Der Spülraum 3 mündet in einen im Detail nicht näher dargestellten Sammeltopf 6 des Spülbehälters 2 ein, an den eine Umwälzpumpe 7 strömungstechnisch angeschlossen ist.

Über entsprechende Versorgungsleitungen 9 sind die Sprüharme 5 der Sprüheinrichtung 4 an die Umwälzpumpe 7 strömungstechnisch angeschlossen, und zwar beispielsweise unter Zwischenschaltung einer Wasserweiche 8. Im bestimmungsgemäßen Verwendungsfall kann damit eine Beschickung der Sprüheinrichtung 4 mit Reinigungsflotte mittels der Umwälzpumpe 7 stattfinden, wobei dank der Wasserweiche 8 eine Beschickung der Sprüharme 5 vorzugsweise wahlweise stattfinden kann.

Die Geschirrspülmaschine 1 verfügt des Weiteren über einen Ablauf 12, über den gebrauchte und nicht mehr benötigte Reinigungsflotte verworfen wird. Es ist zu diesem Zweck eine strömungstechnisch an den Sammeltopf 6 angeschlossene Ablaufleitung 10 vorgesehen, in die eine Ablaufpumpe 11 integriert ist. Sich im Sammeltopf 6 ansammelnde Reinigungsflotte kann bei eingeschalteter Pumpe 11 über die Ablaufleitung 10 abgepumpt und damit verworfen werden.

Zwecks Zuführung von Frischwasser ist ein Frischwasseranschluss 13 vorgesehen. Dieser verfügt über eine an den Sammeltopf 6 strömungstechnisch angeschlossene Frischwasserleitung 14, in die beispielsweise ein Flügelradzähler 15 sowie ein Wasserenthärter 16 integriert sind. Ein Ventil 17 ermöglicht ein fluiddichtes Verschließen der Frischwasserleitung 14.

Das Reinigungsgerät 1 verfügt des Weiteren über eine Wärmepumpeneinrichtung 18. Diese weist einen Verdichter 21, einen Verflüssiger 19, ein Expansionsorgan 23, einen Verdampfer 22 sowie einen diese Baukomponenten strömungstechnisch miteinander verbindenden Strömungskreislauf 30 auf, in dem ein Arbeitsmedium geführt ist.

Der Verdampfer 22 ist innerhalb eines ohne Beschränkung der Allgemeinheit als Wassertank ausgebildeten Wärmespeichermediumtanks 24 angeordnet, der mit Wasser 25 als Wärmeträgermedium befüllt ist. Der Wärmespeichermediumtank 24 ist in Schwerkraftrichtung vorzugsweise zumindest im Wesentlichen unterhalb des Reinigungsbehälters 2, beispielsweise im Sockel der Geschirrspülmaschine, angeordnet.

Im bestimmungsgemäßen Verwendungsfall der Wärmepumpeneinrichtung 18 findet mit Hilfe des Verflüssigers 19 ein Wärmeübertrag von dem in Strömungskreislauf 30 der Wärmepumpeneinrichtung 18 geführten Arbeitsmedium auf die Reinigungsflotte statt. Zu diesem Zweck ist ein an die Umwälzpumpe 7 unter Zwischenschaltung der Wasserweiche 8 angeschlossener Strömungskreislauf 20 vorgesehen, der der Spülflottenumwälzung dient. Die im Betriebsfall im Verflüssiger 19 durch Verflüssigung des Arbeitsmediums freiwerdende Wärmeenergie wird mithin auf die im Strömungskreislauf 20 umgewälzte Reinigungsflotte übertragen. Der Verflüssiger 19 könnte aber auch an anderen Stellen des Reinigungsgeräts angeordnet sein, an denen eine Wärmeübertragung an die Spülflotte möglich ist, beispielsweise im Reinigungsraum 3 oder im Bereich zumindest einer der Versorgungsleitungen 9.

Gemäß der in Fig. 1 gezeigten Ausführungsform ist der Wärmespeichermediumtank 24 über eine Leitung 26 an die Frischwasserleitung 14 strömungstechnisch angeschlossen, was es im Bedarfsfall gestattet, den Wärmespeichermediumtank 24 mit Frischwasser aus dem Frischwasseranschluss 13 zu befüllen. Ein Ventil 27 ermöglicht ein fluiddichtes Verschließen der Leitung 26. Die hier durch die Leitung 26 gegebene strömungstechnische Verbindung zwischen Wärmespeichermediumtank 24 und dem Frischwasseranschluss 13, über den der Wassereinlauf in den Spülbehälter 2 erfolgt, ist lediglich optional. Der Wärmespeichermediumtank 24 kann auch über einen separaten, nicht mit dem Frischwasseranschluss 13 verbundenen Einlass verfügen, mittels dem der Benutzer beispielsweise manuell Wärmespeichermedium 25, insbesondere Wasser in den Wärmespeichermediumtank 24 nachfüllen kann.

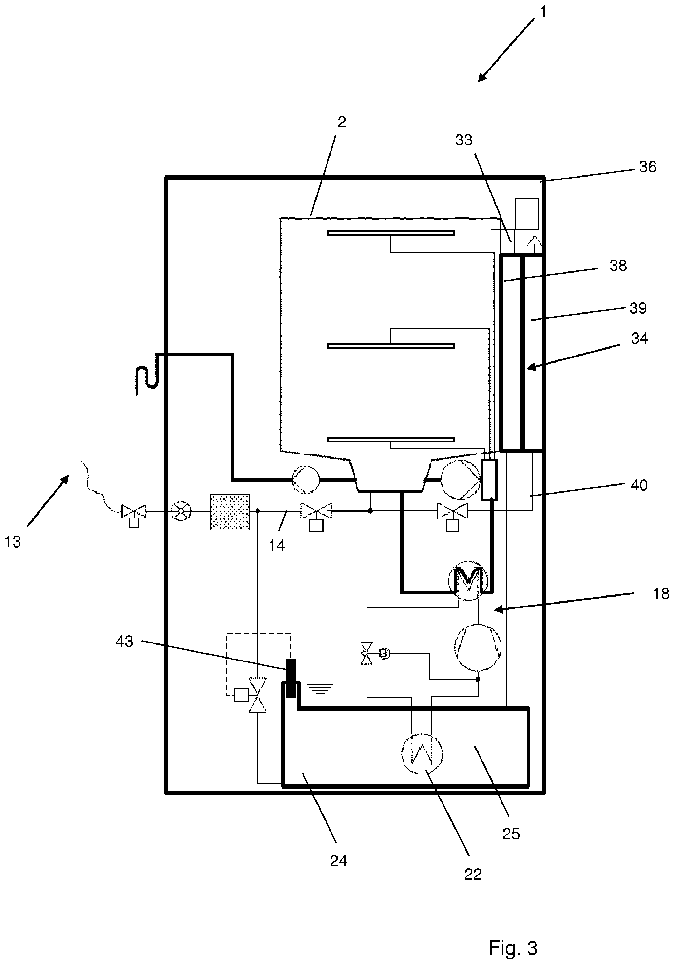

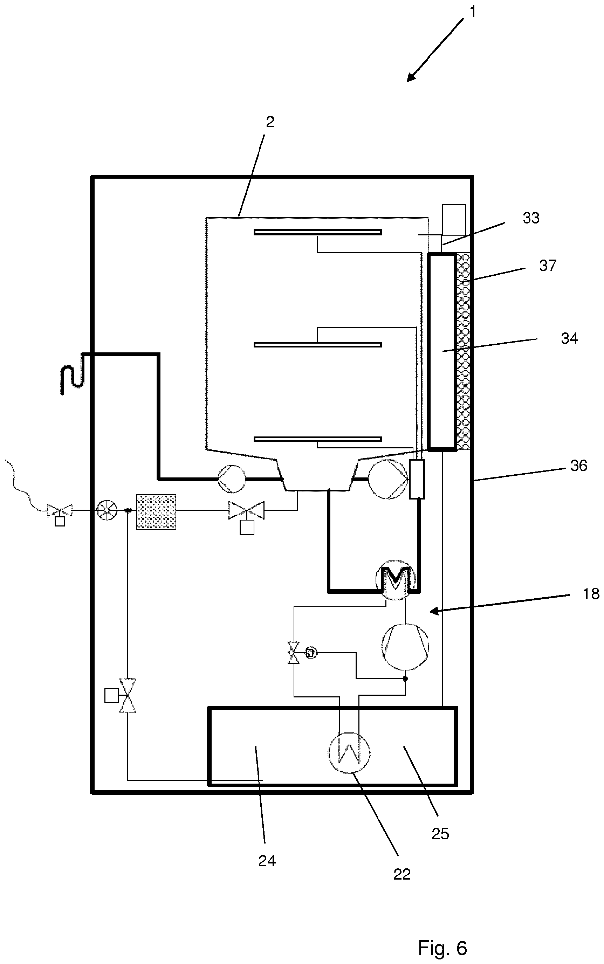

Das Reinigungsgerät 1 weist erfindungsgemäß einen Zwischenspeicher 34 zur Aufnahme von aus dem Wärmespeichermediumtank 24 verdrängtem Wärmespeichermedium 25 auf. Der Zwischenspeicher 34 ist, wie hier gezeigt seitlich oder zumindest größtenteils seitlich des Reinigungsbehälters 2, nämlich im Spaltraum zwischen Gehäuse 36 und Reinigungsbehälter 2 angeordnet. Er weist eine Entlüftung 33 auf, mit der Luft in das Gehäuse des Reinigungsgeräts 1 oder aber, wie in Fig. 3 oder Fig. 6 dargestellt über eine Leitung in den Reinigungsbehälter 2 entweichen kann. Die Ausdehnung des Zwischenspeichers 34 ist in Breitenrichtung 44 des Reinigungsgeräts 1 um ein Vielfaches kleiner als seine Ausdehnung in Höhenrichtung 45 und/oder als in der lotrecht zur Blattebene liegende Tiefenrichtung des Reinigungsgeräts 1. Die Ausdehnung in Breitenrichtung 44 des Reinigungsgeräts 1 beträgt insbesondere weniger als 25mm, vorzugsweise 5 bis 15mm.

Zwischen dem Zwischenspeicher 34 und dem Reinigungsbehälter 2, bzw. der seitlichen Wand des Reinigungsbehälters 2, über die sich der Zwischenspeicher erstreckt, ist gemäß dem Ausführungsbeispiel von Fig. 1 ein Luftspalt 35 vorgesehen, welcher für eine thermische Entkopplung von Reinigungsraum 3 und Zwischenspeicher 34 sorgt. Der Zwischenspeicher 34 und der Reinigungsbehälter 2 sind also beabstandet voneinander angeordnet. Somit wird ein erhöhter Energieverlust aus dem Reinigungsraum 3 während der Heizphasen bzw. der Betriebsphasen der Wärmepumpeneinrichtung 18 bedingt durch das in den Zwischenspeicher 34 verdrängte kühle Wärmespeichermedium 25 vermieden. Der Luftspalt 35 kann gemäß einer Ausführungsform abgedichtet ausgebildet sein, so dass ein Luftstrom in den Luftspalt 35 hinein und aus dem Luftspalt 35 hinaus vermieden wird.

Der Wärmespeichermediumtank 24 ist über eine Verdrängungsleitung 32 mit dem Zwischenspeicher 34 verbunden.

Die in Fig. 1 gezeigte Ausführungsform erlaubt eine Durchführung des erfindungsgemäßen Verfahrens wie folgt. Der Wärmespeichermediumtank 24 ist im Betrieb stets mit Wärmespeichermedium 25, insbesondere Wasser (in flüssiger oder gefrorener Form) gefüllt. Bei Erstinbetriebnahme des Reinigungsgeräts 1 kann eine Befüllung des Wärmespeichermediumtanks 24 beispielsweise aus dem Frischwasseranschluss 13 über die Leitung 26 oder in anderer Weise erfolgen. Gleiches gilt, falls im Betrieb ein zu geringer Füllstand des Wärmespeichermediumtanks 24 - beispielsweise aufgrund von Verdunstung - erkannt wird. Hierzu kann optional ein hier nicht, jedoch beispielsweise in Fig. 3 gezeigter Füllstandssensor 43 vorhanden sein.

Im Normalbetrieb des Reinigungsgeräts 1 wird zur Aufheizung der im Strömungskreislauf 20 umgewälzten Reinigungsflotte die Wärmepumpe 18 betrieben. Während eines solchen bestimmungsgemäßen Betriebs der Wärmepumpeneinrichtung 18 kann es zu einem zumindest teilweisen Erstarren oder Einfrieren des im Wärmespeichermediumtank 24 bevorrateten Wärmespeichermediums 25 kommen. Hierdurch bedingt kommt es zu Ausdehneffekten. Ein Bersten des Wärmespeichermediumtanks 24 ist gleichwohl sicher ausgeschlossen, da ausdehnungsbedingt ausgetriebenes flüssiges Wärmespeichermedium 25 aus dem Wärmespeichermediumtank 24 über die Verdrängungsleitung 32 in den Zwischenspeicher 34 abströmen kann; dies erfolgt insbesondere pumpenlos. Das flüssige Wärmespeichermedium 25 gelangt in den Zwischenspeicher 34 allein dadurch, dass es durch das sich im Wärmespeichermediumtank 24 bildende erstarrte Wärmespeichermedium, etwa Eis aus diesem verdrängt wird. Im Zwischenspeicher 34 wird das sehr kühle Wärmespeichermedium 25 temporär zwischengespeichert. Nach einem Auftauen bzw. Schmelzen von sich im Wärmespeichermediumtank 24 befindlichem erstarrten Wärmespeichermedium, insbesondere Eis, kann das im Zwischenspeicher 34 zwischengespeicherte Wärmespeichermedium 25 insbesondere der Schwerkraft folgend, über die Verdrängungsleitung 32 zurück in den Wärmespeichermediumtank 24 strömen. Gemäß dieser Konstruktion geht also weder dem Wärmespeichermediumtank 24 Wärmespeichermedium 25 verloren, noch kommt es zu einer Einleitung von Eiswasser in den Reinigungsbehälter 2. Anders ausgedrückt bilden Wärmespeichermediumtank 24 und Zwischenspeicher 34 hier gemeinsam ein geschlossenes System.

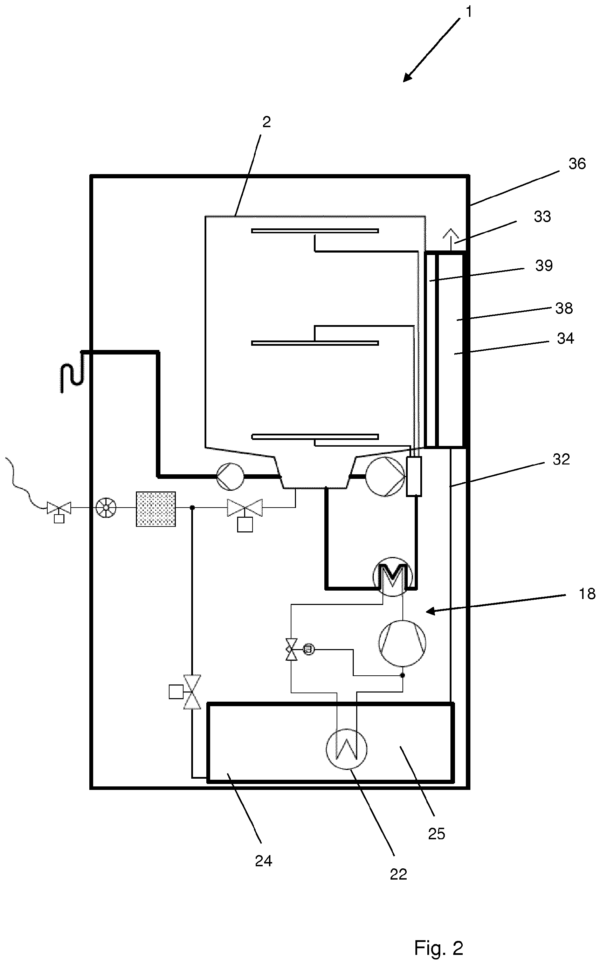

Fig. 2 zeigt ein zweites Ausführungsbeispiel der Erfindung. Es unterscheidet sich vom Ausführungsbeispiel der Fig. 1 lediglich geringfügig und zwar dadurch, dass der Zwischenspeicher zwei Kammern 38,39 aufweist, wobei die erste Kammer 38 zur erfindungsgemäßen Aufnahme des aus dem Wärmespeichermediumtank 24 verdrängtem Wasser dient, während die zweite Kammer 39 mit ihrem Volumenraum, der insbesondere frei von Wasser bleibt, isolierend wirkt. Die zweite Kammer 39 ist insbesondere zwischen der ersten Kammer 38 und dem Reinigungsbehälter 2 angeordnet. Der Zwischenspeicher 34 umfasst somit eine Trennwand, welche die zweite Kammer 39 von der ersten Kammer 38 abtrennt und einen Übertritt des Wärmespeichermediums von der ersten Kammer 38 in die zweite Kammer 39 verhindert. Die zweite Kammer 39 sorgt für eine weiter verbesserte thermische Entkopplung von Reinigungsraum 3 und der ersten Kammer 38 des Zwischenspeichers 34. Somit wird ein erhöhter Energieverlust aus dem Reinigungsraum 3 während der Heizphasen bzw. der Betriebsphasen der Wärmepumpeneinrichtung 18 bedingt durch das in die erste Kammer 38 des Zwischenspeichers 34 verdrängte kühle Wasser vermieden. Vorzugsweise wird der Spaltraum zwischen Reinigungsbehälter 2 und Gehäuse 36 durch den Zwischenspeicher 34 in horizontaler Richtung im Bereich des Zwischenspeichers 34 vollständig ausgefüllt. Anders ausgedrückt liegt die zweite Kammer 39 des Zwischenspeichers 34 mit ihrer der ersten Kammer 38 abgewandten Seite unmittelbar an einer Seitenwand des Reinigungsbehälters 2 an. Die erste Kammer 38 des Zwischenspeichers 34 liegt mit ihrer der zweiten Kammer 39 abgewandten Seite unmittelbar an der Gehäusewand 36 des Reinigungsgeräts 1 an. Auf diese Weise wird eine besonders kompakte Anordnung realisiert. Außerdem wird ein Erwärmen des Wärmespeichermediums 25 durch thermische Energie aus dem Aufstellungsraum des Reinigungsgeräts 2 beschleunigt.

Ein weiteres Ausführungsbeispiel, bei dem der Zwischenspeicher 34 entsprechend Fig. 2 ebenfalls zwei von einer insbesondere vertikalen Trennwand abgetrennte Kammern 38, 39 aufweist, zeigt Fig. 3. Die erste Kammer 38 dient wiederum zur erfindungsgemäßen Aufnahme des aus dem Wärmespeichermediumtank 24 verdrängtem Wärmespeichermedium 25. Die zweite Kammer 39 dient in diesem Ausführungsbeispiel (ebenfalls) zumindest zeitweilig zur Bevorratung von Wasser, z.B. von Frischwasser. Die zweite Kammer 39 ist zu diesem Zweck über eine Leitung 40 an den Frischwasseranschluss 13 bzw. die Frischwasserleitung 14 und/oder an den Reinigungsbehälter 2 strömungstechnisch angeschlossen. Gemäß einer ersten hier dargestellten Alternative ist dabei die erste Kammer 38 zwischen Reinigungsbehälter 2 und zweiter Kammer 39 angeordnet, in einer zweiten hier nicht gezeigten Alternative ist die zweite Kammer 39 zwischen Reinigungsbehälter 2 und erster Kammer 38 angeordnet.

Die zweite Kammer 39 kann dazu genutzt werden, Frischwasser vor Einleitung in den Reinigungsbehälter 2 in an sich bekannter Weise zwischenzuspeichern, so dass das Frischwasser bei der Einleitung bereits auf Umgebungstemperatur erwärmt ist. Indem die erste Kammer 38 und die zweite Kammer 39 in einem einzigen Behälter integriert werden, kann der begrenzte spaltförmige Bauraum seitlich des Reinigungsbehälters 2 mit diesem Behälter bestmöglich genutzt werden. Dabei kann durch die mit Frischwasser befüllte zweite Kammer 39 vorteilhafterweise ein verbesserter Wärmeübergang in das während eines Betriebs der Wärmepumpe 18 in die erste Kammer 38 des Zwischenspeichers 34 verdrängte, sehr kühle Wärmespeichermedium stattfinden. Dies bewirkt letztendlich eine schnellere Aufheizung des Wärmespeichermediumtankinhalts 25. Dadurch kann die Wärmepumpe 18 frühzeitiger wiedereingesetzt und effizienter betrieben werden. Gleichzeitig wirkt die zweite Kammer 39 je nach Anordnung als Dämmschicht entweder zwischen der ersten Kammer 38 und dem Reinigungsbehälter 2, wodurch eine ungewünschte Abkühlung des Reinigungsbehälters 2 vermieden werden kann, oder zwischen der ersten Kammer 38 und der Gehäusewand 36, wodurch eine ungewünschte Kondensation an der Gehäuseaußenwand vermieden werden kann.

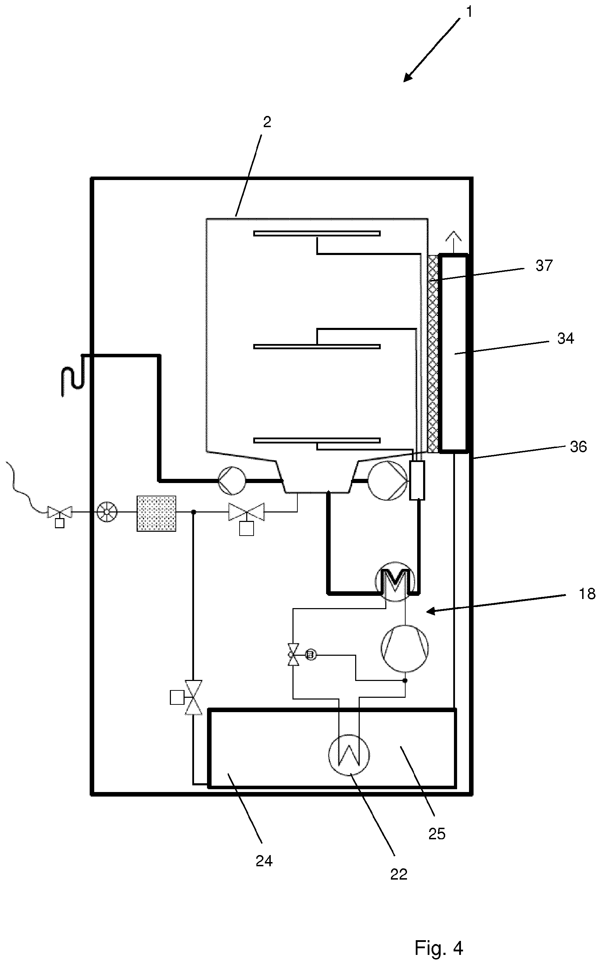

Fig. 4 zeigt ein weiteres Ausführungsbeispiel der Erfindung. Es unterscheidet sich von den Ausführungsbeispielen der Fig. 1 und 2 lediglich geringfügig und zwar dadurch, dass zwischen dem Zwischenspeicher 34 und dem Reinigungsbehälter 2 eine Wärmedämmschicht 37 angeordnet ist. Diese kann am Zwischenspeicher 34 und/oder am Reinigungsbehälter 2 angebracht sein und füllt den Spaltraum zwischen Zwischenspeicher 34 und Reinigungsbehälter 2 vorzugsweise vollständig aus.

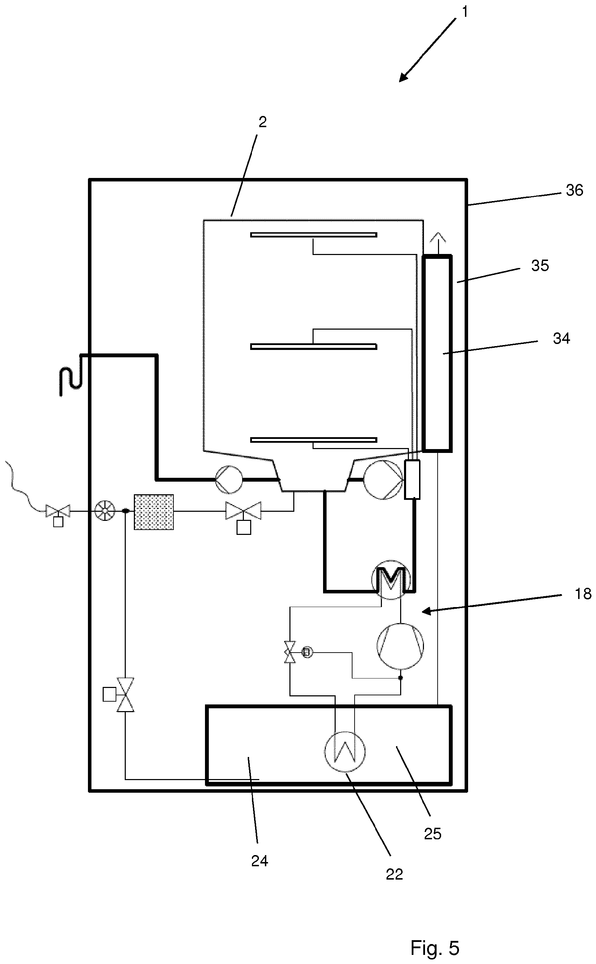

Der Zwischenspeicher 34 kann mit seiner dem Reinigungsbehälter 2 abgewandten Seite an der Gehäusewand 36 des Reinigungsgeräts 1 insbesondere vollflächig anliegen. Um eine Betauung der Gehäuseaußenseite sicher zu vermeiden kann der Zwischenspeicher 34 von der Gehäusewand 36 jedoch auch thermisch entkoppelt ausgeführt sein. So kann etwa ein zwischen Zwischenspeicher 34 und der Gehäusewand 36 angeordneter Luftspalt 35 vorgesehen sein, wie in Fig. 5 dargestellt. Alternativ oder zusätzlich kann der Zwischenspeicher 34 auf dieser, also dem Reinigungsbehälter 2 abgewandten Seite eine Wärmedämmschicht 37 aufweisen, wie in Fig. 6 dargestellt. Diese kann am Zwischenspeicher 34 und/oder an der Gehäusewand 36 angebracht sein und füllt den Spaltraum zwischen Zwischenspeicher 34 und Gehäusewand 36 vorzugsweise vollständig aus.

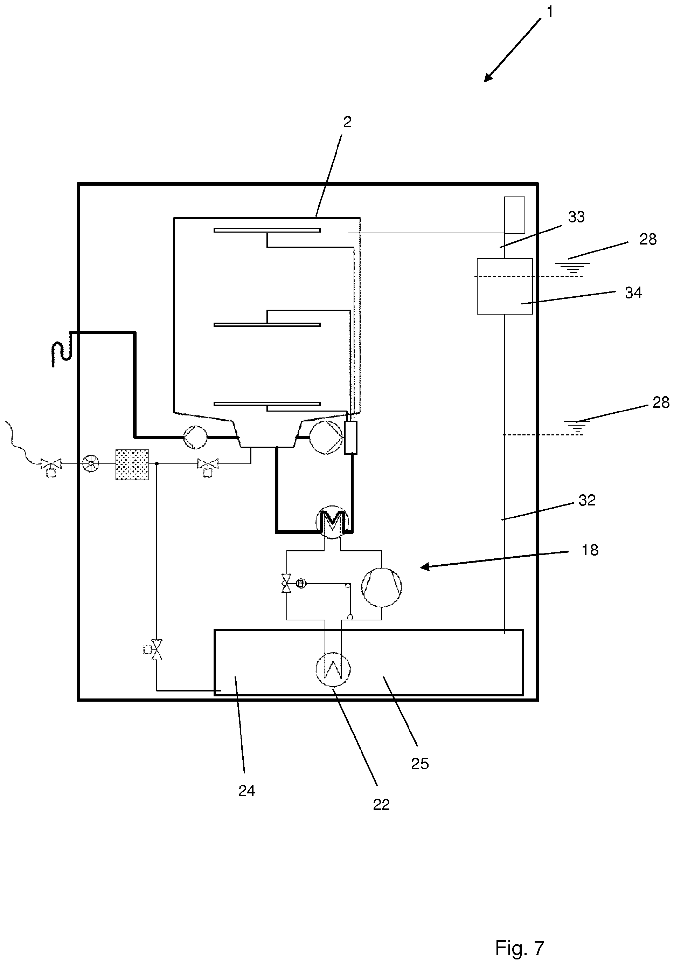

Fig. 7 zeigt ein Ausführungsbeispiel, bei dem in der Verdrängungsleitung 32 zwischen dem Wärmespeichermediumtank 24 und dem Zwischenspeicher 34 ein Füllstandssensor 28 angeordnet ist und/oder bei dem im Zwischenspeicher 34 ein Füllstandssensor 28 angeordnet ist. Der Füllstandssensor 28 oder die Füllstandssensoren können beispielsweise als Schwimmerschalter oder als optische Sensoren ausgeführt sein. Diese sind mit der nicht dargestellten Steuereinrichtung des Reinigungsgeräts 1 verbunden. Abhängig von den Messsignalen des Sensors 28 oder der Sensoren kann die Steuereinrichtung einen Vereisungsgrad des Wärmespeichermediumtanks 24 bestimmen oder zumindest das Überschreiten oder Unterschreiten eines vorgegebenen Vereisungsgrads des Wärmespeichermediumtanks 24 erfassen.

Vorzugsweise kann mit einem, vorzugsweise ersten, Sensor 28 zumindest das Erreichen oder Überschreiten eines vorgegebenen ersten Füllstands des Zwischenspeichers 34 erfasst werden. Bei Erreichen oder Überschreiten dieses Füllstands sorgt die Steuereinrichtung vorzugsweise für eine automatische Abschaltung der Wärmepumpe 18. Ein Erreichen dieses Füllstands korrespondiert mit einer Verdrängung einer bestimmten Menge des Wärmespeichermediums 25 aus dem Wärmespeichermediumtank 24 in den Zwischenspeichers 34. Diese wiederum resultiert aus einem bestimmten Anteil des Wärmespeichermedium 25 im Wärmespeichermediumtank 24, der in gefrorener Form vorliegt und dadurch ein erhöhtes Volumen im Wärmespeichermediumtank 24 einnimmt. Bei Erreichen des vorgegebenen ersten Füllstands im Zwischenspeicher 34 ist dieser Anteil so groß, dass eine energieeffiziente Aufheizung der Reinigungsflotte mittels der Wärmepumpe 18 nicht mehr möglich ist und/oder dass eine Schädigung einer oder mehrerer Komponenten des Reinigungsgeräts 1 droht. Vorzugsweise kann mit einem, vorzugsweise zweiten, Sensor 28 alternativ oder zusätzlich zumindest das Erreichen oder Unterschreiten eines vorgegebenen zweiten Füllstands im Zwischenspeicher 34 oder in der Verdrängungsleitung 32 erfasst werden. Bei Erreichen oder Unterschreiten dieses vorgegebenen zweiten Füllstands kann eine zuvor ausgeschaltete Wärmepumpe 18 wieder in Betrieb genommen werden, bzw. es ist wieder ein Reinigungsprogramm auswählbar, welches einen Wärmepumpenbetrieb vorsieht. Die Steuereinrichtung kann insbesondere dazu ausgebildet sein, abhängig von den Messsignalen des Füllstandssensor 28 oder der -sensoren einen Zeitpunkt oder eine Zeitdauer, ab dem ein Betrieb der Wärmepumpe 18 wieder möglich ist, zu bestimmen und/oder optisch oder akustisch anzuzeigen. Die Steuereinrichtung kann insbesondere auch dazu eingerichtet sein, die Wärmepumpe 18 abhängig von den Messsignalen des Füllstandssensor 28 oder der -sensoren abzuschalten oder in einem Spülprogramm abgeschaltet zu lassen. In diesem Fall wird in dem Spülprogramm vorzugsweise eine alternative Heizeinrichtung zur Erwärmung der Spülflotte eingesetzt. Aufgrund des beschriebenen Füllstandssensor 28 in der Verdrängungsleitung 32 und/oder im Zwischenspeicher 34 kann auf eine Sensorik innerhalb des Wärmespeichermediumtanks 24, welche vergleichsweise aufwändig, fehleranfällig und schwer zu warten wäre, verzichtet werden.

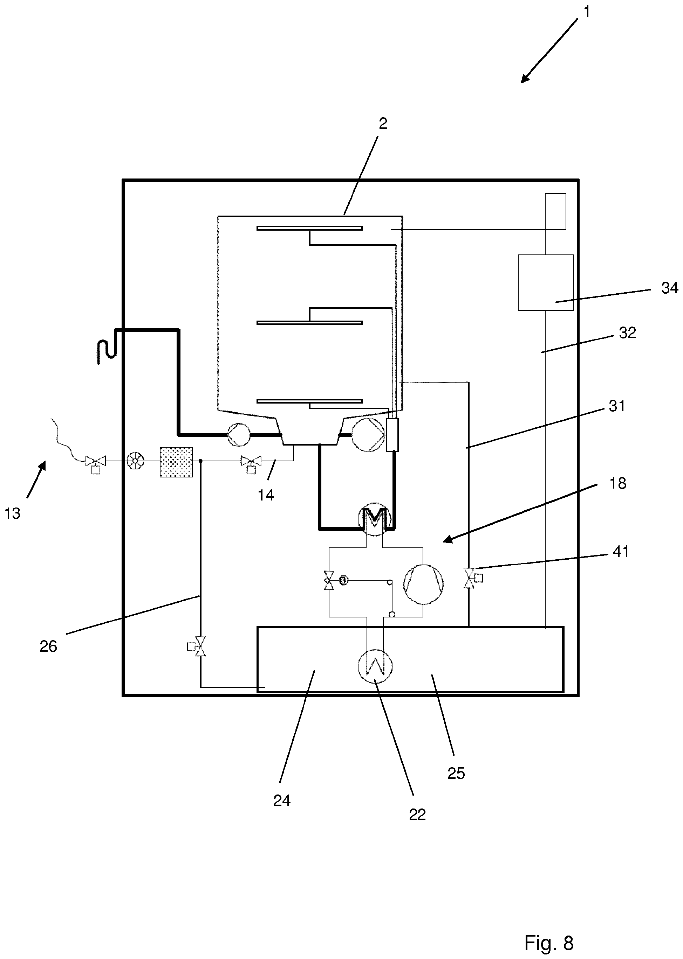

In den vorgenannten Ausführungsbeispielen ist der Wärmespeichermediumtank 24 gemeinsam mit dem Zwischenspeicher 34 als "geschlossenes" System ausgebildet. Dabei wird das enthaltene Wärmespeichermedium 25 lediglich als Energiequelle für die Wärmepumpe 18 verwendet, es ist jedoch nicht für eine Einleitung in den Reinigungsraum 3 vorgesehen. Dagegen zeigt Fig. 8 ein Ausführungsbeispiel mit einem "offenen" System. Es unterscheidet sich vorrichtungsseitig von den vorgenannten Ausführungsbeispielen im Wesentlichen dadurch, dass der als Wassertank ausgebildete Wärmespeichermediumtank 24 über eine Überlaufleitung 31 mit dem Reinigungsbehälter 2 strömungstechnisch verbunden ist, so dass Frischwasser aus dem Wassertank 24 in den Reinigungsbehälter 2 einleitbar ist. Die für ein Reinigungsprogramm erforderliche Frischwassermenge wird ganz oder zumindest teilweise über die Überlaufleitung 31 aus dem Wassertank 24 in den Reinigungsbehälter 2 eingelassen. Dies kann dadurch erfolgen, dass Frischwasser über die Leitung 26 in den Wassertank 24 eingelassen wird und dadurch zuvor darin bevorratetes Wasser über die Überlaufleitung 31 herausgetrieben wird. Alternativ kann das Wasser aus dem Wassertank 24, etwa mittels einer nicht gezeigten Pumpe, über die Überlaufleitung 31 in den Reinigungsbehälter überführt und der Wassertank 24 anschließend mit einer entsprechenden Menge Frischwasser aus dem Frischwasseranschluss 13 über die Leitung 26 wiederbefüllt werden.

Somit ist es grundsätzlich möglich, auf eine weitere Frischwasserleitung 14, die den Frischwasseranschluss 13 mit dem Reinigungsbehälter 2 unter Umgehung des Wassertanks 24 verbindet, zu verzichten. Im gezeigten Ausführungsbeispiel von Fig. 8 ist eine solche Frischwasserleitung 14 jedoch vorhanden. Hierdurch ist es möglich, dass der Frischwassereinlauf wahlweise entweder über die Frischwasserleitung 14 oder aus dem Wassertank 24 über die Überlaufleitung 31 erfolgt. Der Wassertank 24 stellt ein großes Wasserreservoir bereit. Wenn das Frischwasser im Wassertank 24 aufgrund einer hinreichend langen Bevorratung im Wassertank 24 Umgebungstemperatur, beispielsweise 23°C, aufweist, so stellt die Verwendung des Frischwassers aus dem Wassertank 24 für den Wassereinlauf in einem Reinigungsprogramm einen erheblichen energetischen Vorteil dar gegenüber der Verwendung von Frischwasser, welches über die Frischwasserleitung 14 unmittelbar aus dem Frischwasseranschluss 13 und somit unter Umgehung des Wassertanks 24 bezogen wurde (und typischerweise z. B. 15°C aufweist). Anders ist die Situation jedoch, wenn das Wasser 25 im Wassertank 24 aufgrund eines Betriebs der Wärmepumpe 18 in einem zuvor durchlaufenen Reinigungsschritt oder einem früheren Reinigungsprogramm noch sehr kalt ist. In diesem Fall ist es energetisch günstiger, wenn der Wassereinlauf über die Frischwasserleitung 14 unmittelbar aus dem Frischwasseranschluss 13 erfolgt. Eine Sensoreinrichtung ist somit dazu eingerichtet, den Frischwassereinlauf wahlweise entweder über die Frischwasserleitung 14 oder über die Überlaufleitung 31 vorzunehmen. Die Auswahl durch die Steuereinrichtung kann dabei beispielsweise zeitgesteuert erfolgen, insbesondere abhängig von der Zeitdauer, die seit dem letztmaligen Betrieb der Wärmepumpe 18 vergangen ist. Die Auswahl kann alternativ oder zusätzlich auch temperaturgesteuert erfolgen, insbesondere abhängig von der Temperatur des Wassers 25 im Wassertank 24. Hierfür kann zumindest ein Sensor vorhanden sein, der die Temperatur des Wassers 25 im Wassertank 24 oder einen von der Temperatur des Wassers 25 im Wassertank 24 abhängigen Parameter misst. Ein Sensor kann insbesondere im oder am Wassertank 24 angeordnet sein. Es kann jedoch auch, wie in Zusammenhang mit Fig. 7 beschrieben, ein in der Überlaufleitung 32 und/oder ein im Zwischenspeicher 34 angeordneter Füllstandssensor 28 vorhanden sein. Zur Bestimmung der Temperatur des Wassers 25 im Wassertanks 24 kann jedoch auch ein im Reinigungsbehälter 2, etwa im Sammeltopf im Falle eines Geschirrspülgeräts, vorhandener Temperatursensor, welcher ohnehin typischerweise vorhanden ist, eingesetzt werden. Dabei wird zunächst eine erste, geringfügige Wassermenge aus dem Wassertank 24 in den Reinigungsbehälter 2 eingelassen, dann eine Temperaturmessung durch den Temperatursensor vorgenommen und anschließend die für den anstehenden Reinigungsprogrammschritt erforderliche Frischwassermenge noch fehlende zweite Wassermenge in den Reinigungsbehälter 2 eingelassen. Die erste Wassermenge ist dabei eine minimale Wassermenge, welche für die Durchführung der Temperaturmessung ausreicht. Die zweite Wassermenge wird dabei ebenfalls aus dem Wassertank 24 bezogen, wenn die Temperaturmessung einen vorgegebenen Wert überschreitet, andernfalls wird sie über die Frischwasserleitung 14 unmittelbar aus dem Frischwasseranschluss 13 bezogen. Die zweite Wassermenge ist insbesondere wesentlich größer als die erste Wassermenge, vorzugsweise um ein Vielfaches größer.

Nach einem durchgeführten Wassereinlauf aus dem Wassertank 24 in den Reinigungsbehälter 2 erfolgt eine Wiederbefüllung des Wassertanks 24 mit einer entsprechenden Menge Frischwasser aus dem Frischwasseranschluss 13 über die Leitung 26. Außerdem wird die vom Wassertank 24 in den Reinigungsbehälter 2 führende Überlaufleitung 31 vorzugsweise abgesperrt. Bei einem nachfolgenden Betrieb der Wärmepumpe 18 in einem Reinigungsschritt mit zu erwärmender Reinigungsflotte, kann es wie bereits beschrieben zu einer Vereisung des Wassers 25 im Wassertank 24 kommen, wodurch ein Teil des Wassers über die Verdrängungsleitung 32 in den Zwischenspeicher 34 verdrängt wird. Es wird jedoch kein Wasser aus dem Wassertank 24 in den Reinigungsbehälter 2 verdrängt. Dies kann entweder durch das Absperrorgan 41 verhindert werden oder durch die Ausbildung von Überlaufleitung 31, Verdrängungsleitung 32 und Zwischenspeicher 34 und/oder deren relative Anordnung zueinander.

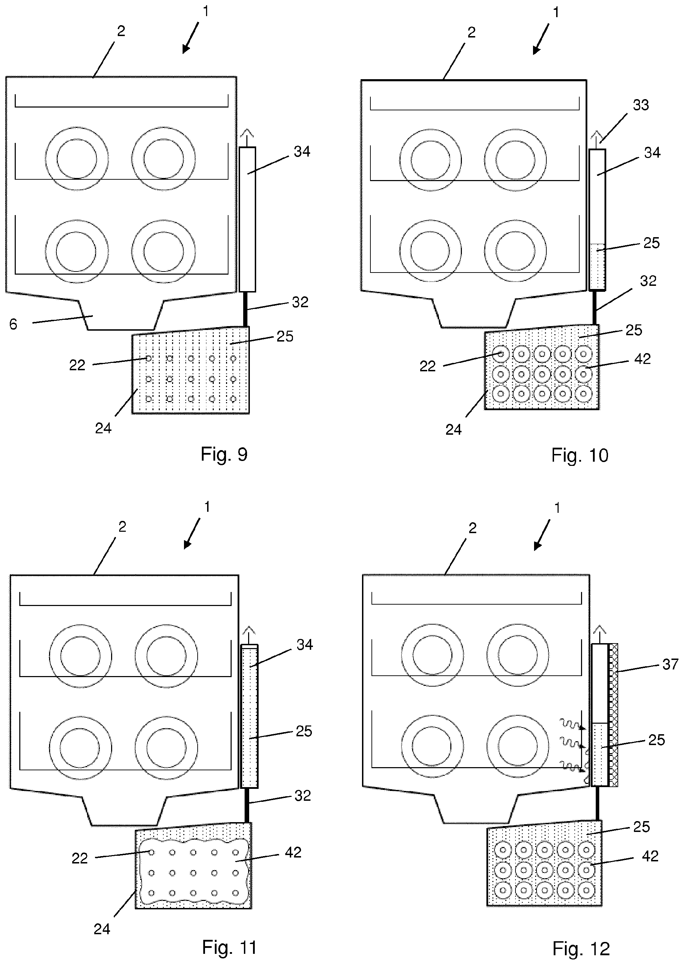

Die Figuren 9 bis 12 stellen noch einmal das grundlegende Prinzip der Erfindung und die Anordnung von Reinigungsbehälter 2, Wärmespeichermediumtank 24 und Zwischenspeicher 34 in schematischen Querschnittszeichnungen dar. Der Wärmespeichermediumtank 24 ist unterhalb oder im Wesentlichen unterhalb des hier als Geschirrspüler ausgestalteten Reinigungsbehälters 2 angeordnet. "Im Wesentlichen unterhalb" bedeutet dabei, dass der Wärmespeichermediumtank 24 mit einem vergleichsweise geringen Anteil auch seitlich des Reinigungsgeräts 2, zumindest seitlich des Sammeltopfs 6 eines Geschirrspülers, angeordnet sein kann, dass aber der Hauptteil des Wärmespeichermediumtanks 24 unterhalb des Reinigungsbehälters 2 angeordnet ist. Der Wärmespeichermediumtank 24 nutz den Platz im Sockel des Reinigungsgeräts 2 bestmöglich aus. Ein Zwischenspeicher 34 ist oberhalb des Wärmespeichermediumtanks 24 und vorzugsweise wie hier gezeigt seitlich oder im Wesentlichen seitlich des Reinigungsgeräts 2 angeordnet. Vor Beginn eines Reinigungsschritts, bei dem die Reinigungsflotte durch Betrieb einer Wärmepumpe 18 aufgeheizt wird, ist der Wärmespeichermediumtank 24 vollständig oder nahezu vollständig mit Wärmespeichermedium 25 befüllt, wie in Fig. 9 dargestellt. Der Verdampfer 22 der Wärmepumpe 18 ist in Form von mehreren Rohrschlangen im Wärmespeichermediumtank 24 angeordnet. Der Zwischenspeicher 34 ist in diesem Ausgangszustand unbefüllt. Bei Betrieb der Wärmepumpe 18 kommt es zu einer Abkühlung des Wärmespeichermediums 25 im Wärmespeichermediumtank 24 bis zu einem Erstarren bzw. Gefrieren des Wärmespeichermediums 25. Es bilden sich um die Rohrschlangen des Verdampfers 22 herum beispielsweise eine nach und nach wachsende Eisschicht 42, wie in Fig. 10 dargestellt. Aufgrund der durch die Vereisung bedingten Volumenvergrößerung des Wärmespeichermediums 25 im Wärmespeichermediumtank 24 wird ein Teil des Wärmespeichermediums 25 über die Verdrängungsleitung 32 in den Zwischenspeicher 34 gedrängt. Dies kann ggf. fortgesetzt werden bis der Inhalt des Wärmespeichermediumtanks 24 größtenteils erstarrt bzw. vereist ist wie in Fig. 11 gezeigt. Der Zwischenspeicher 34 ist nun zumindest weitgehend gefüllt. Nach Abschluss des Wärmepumpenbetriebs erwärmt sich der Wärmespeichermediumtank 24 bzw. sein Inhalt sukzessive, wobei das schmelzende Eis und die dadurch bedingte Volumenverringerung des Wärmespeichermediumtankinhalts ein schwerkraftbedingtes Zurückfließen des im Zwischenspeicher 34 zwischengelagerten Wärmespeichermediums 25 ermöglicht, wie in Fig. 12 dargestellt. Bei hinreichender Wartezeit ist der Ausgangszustand von Fig. 9 wieder erreicht. Der Zwischenspeicher 34 kann wärmeleitend mit einer Seitenwand des Reinigungsbehälters 2 verbunden sein, insbesondere mit seiner Seitenfläche unmittelbar an der Seitenwand des Reinigungsbehälters 2 anliegen. Dadurch kann der nach Betrieb der Wärmepumpe 18 mit kühlem Wärmespeichermediums 25 gefüllte Zwischenspeicher 34 eine Kondensationstrocknung innerhalb des Reinigungsraums 3 unterstützen; andererseits wird dadurch das Wasser 25 im Zwischenspeicher 34 vorteilhafterweise besonders effektiv erwärmt, wie in Fig. 12 durch die geschlängelten Pfeile angedeutet. Hierdurch wird auch ein beschleunigtes Erwärmen des Wärmespeichermediumtanks 24 bewirkt und ein frühe Wiedereinsetzbarkeit der Wärmepumpe 18 erreicht. Der Zwischenspeicher 34 kann auch mit der dem Reinigungsraum 3 abgewandten Seite an der hier nicht gezeigten Gehäusewand 36 anliegen, um ein verbessertes Erwärmen des Wärmespeichermediums 25 durch thermische Energie aus dem Aufstellungsraum des Reinigungsgeräts 2 zu erreichen. Alternativ kann aber auch, wie in Fig. 12 beispielhaft gezeigt, diese Seite mit einer Isolierung 37 versehen sein, um ein Betauungsrisiko an der Gehäusewand zu vermeiden.

### Bezugszeichen

- 1: Reinigungsgerät bzw. Geschirrspülmaschine
- 2: Reinigungsbehälter bzw. Spülbehälter
- 3: Reinigungsraum bzw. Spülraum
- 4: Sprüheinrichtung
- 5: Sprüharm
- 6: Sammeltopf
- 7: Umwälzpumpe
- 8: Wasserweiche
- 9: Leitung
- 10: Ablaufleitung
- 11: Pumpe
- 12: Ablauf
- 13: Frischwasseranschluss
- 14: Frischwasserleitung
- 15: Flügelradzähler
- 16: Enthärter
- 17: Ventil
- 18: Wärmepumpeneinrichtung
- 19: Verflüssiger
- 20: Strömungskreislauf
- 21: Verdichter
- 22: Verdampfer
- 23: Expansionsorgan, z.B. Drossel
- 24: Wärmespeichermediumtank, z.B. Wassertank
- 25: Wärmespeichermedium, z.B. Wasser
- 26: Leitung
- 27: Ventil
- 28: Füllstandssensor
- 30: Strömungskreislauf
- 31: Überlaufleitung
- 32: Verdrängungsleitung
- 33: Entlüftung
- 34: Zwischenspeicher
- 35: Luftspalt
- 36: Gehäuse
- 37: Isolierungsschicht
- 38: erste Kammer
- 39: zweite Kammer
- 40: Leitung
- 41: Ventil
- 42: Eisschicht
- 43: Füllstandssensor
- 44: Breitenrichtung
- 45: Höhenrichtung

## Patentansprüche

1. Reinigungsgerät (1), insbesondere Geschirrspülmaschine, mit einem einen Reinigungsraum (3) bereitstellenden Reinigungsbehälter (2), der der Aufnahme von zu reinigendem Reinigungsgut dient, und einer Wärmepumpeneinrichtung (18), die einen innerhalb eines Wärmespeichermediumtanks (24) angeordneten Verdampfer (22) aufweist,
wobei oberhalb des Wärmespeichermediumtanks (24) ein Zwischenspeicher (34) angeordnet ist, der zur Aufnahme von flüssigem Wärmespeichermedium (25) dient, welches durch eine im Betrieb der Wärmepumpeneinrichtung (18) bewirkte Volumenvergrößerung durch teilweises Gefrieren des Inhalts des Wärmespeichermediumtanks (24) aus dem Wärmespeichermediumtank (24) verdrängt wird,
**dadurch gekennzeichnet,**
**dass** der Wärmespeichermediumtank (24) zumindest größtenteils unterhalb des Reinigungsbehälters (2) angeordnet ist,
und **dass** der Zwischenspeicher (34) zumindest größtenteils seitlich des Reinigungsbehälters (2) angeordnet ist.

2. Reinigungsgerät nach Anspruch 1,
**dadurch gekennzeichnet, dass**
der Wärmespeichermediumtank (24) ein Volumen von 3 bis 7 Liter, insbesondere von 3,5 bis 5,5 Liter, aufweist und/oder dass der Zwischenspeicher (34) ein Volumen zwischen 50 und 550 Milliliter, insbesondere ein Volumen zwischen 250 und 450 Milliliter aufweist.

3. Reinigungsgerät nach einem der vorhergehenden Ansprüche,
**dadurch gekennzeichnet, dass**
der Wärmespeichermediumtank (24) und der Zwischenspeicher (34) einstückig ausgebildet sind oder über eine Verdrängungsleitung (32) miteinander verbunden sind.

4. Reinigungsgerät nach einem der vorhergehenden Ansprüche,
**dadurch gekennzeichnet, dass**
eine Überführung von Wärmespeichermedium aus dem Wärmespeichermediumtank (24) oder dem Zwischenspeicher (34) in den Reinigungsbehälter (2) ausgeschlossen ist.

5. Reinigungsgerät nach einem der Ansprüche 1 bis 3,
**dadurch gekennzeichnet, dass**
der Wärmespeichermediumtank (24) an eine Frischwasserzufuhr (13) einerseits und an eine in den Reinigungsbehälter (2) mündende Überlaufleitung (31) andererseits strömungstechnisch angeschlossen ist, wobei der Zwischenspeicher (34) in die Überlaufleitung (31) integriert oder endseitig der Verdrängungsleitung (32) angeordnet ist.

6. Reinigungsgerät nach einem der Ansprüche 1 bis 3,
**dadurch gekennzeichnet, dass**
der Wärmespeichermediumtank (24) unter strömungstechnischer Zwischenschaltung des Zwischenspeichers (34) an eine Frischwasserzufuhr (13) angeschlossen ist.

7. Reinigungsgerät nach einem der vorhergehenden Ansprüche,
**dadurch gekennzeichnet, dass**
der Zwischenspeicher (34) auf seiner dem Reinigungsbehälter (2) zugewandten Seite eine Isolierung aufweist.

8. Reinigungsgerät nach einem der vorhergehenden Ansprüche,
**dadurch gekennzeichnet, dass**
der Zwischenspeicher (34) wärmeleitend mit dem Gehäuse (36) des Reinigungsgeräts (1) verbunden ist.

9. Reinigungsgerät nach einem der vorhergehenden Ansprüche,
**dadurch gekennzeichnet, dass**
im Zwischenspeicher (34) und/oder in der Verdrängungsleitung (32) ein Füllstandssensor (28), insbesondere ein Schwimmerschalter oder ein optischer Sensor, angeordnet ist.

10. Verfahren zum Betrieb eines Reinigungsgeräts nach einem der vorhergehenden Ansprüche, mit einem einen Reinigungsraum (3) bereitstellenden Reinigungsbehälter (2) und einer Wärmepumpeneinrichtung (18), die einen innerhalb eines Wärmespeichermediumtanks (24) angeordneten Verdampfer (22) aufweist, bei dem in einem Programmschritt eines Reinigungsprogramms das im Wärmespeichermediumtank (24) bevorratete flüssige Wärmespeichermedium (25) durch Betrieb der Wärmepumpeneinrichtung (18) so stark abgekühlt wird, dass das Wärmespeichermedium (25) teilweise gefriert, **dadurch gekennzeichnet, dass** dadurch ein Teil des Wärmespeichermediums (25) aus dem größtenteils unterhalb des Reinigungsbehälters (2) angeordneten Wärmespeichermediumtank (24) in einen oberhalb des Wärmespeichermediumtanks (24) und zumindest größtenteils seitlich des Reinigungsbehälters (2) angeordneten Zwischenspeicher (34) verdrängt wird.

11. Verfahren nach Anspruch 10,
**dadurch gekennzeichnet, dass**
die verdrängte Teilmenge des Wärmespeichermediums (25) in einem nachfolgenden Programmschritt des Reinigungsprogramms oder außerhalb des Reinigungsprogramms schwerkraftbedingt in den Wärmespeichermediumtank (24) zurückfließt.

12. Verfahren nach Anspruch 10 oder 11,
**dadurch gekennzeichnet, dass**
eine Füllstandsmessung im Zwischenspeicher (34) und/oder in der Verdrängungsleitung (32) vorgenommen wird, bei der insbesondere sensiert wird, ob ein vorgegebener Wasserpegel im Zwischenspeicher (34) und/oder in der Verdrängungsleitung (32) erreicht oder überschritten ist.

13. Verfahren nach dem vorhergehenden Anspruch,
**dadurch gekennzeichnet, dass** eine Füllstandsmessung unmittelbar bei Start eines Spülprogramms und/oder zu Beginn eines Programmschritts mit aufzuheizender Reinigungsflotte vorgenommen wird.

14. Verfahren nach dem Anspruch 12 oder 13, **dadurch gekennzeichnet, dass** abhängig von der Füllstandsmessung die Wärmepumpeneinrichtung (18) ausgeschaltet wird oder in dem Spülprogramm ausgeschaltet bleibt und/oder ein Zeitpunkt bzw. eine Zeitdauer, nach dem ein Betrieb der Wärmepumpeneinrichtung (18) wieder möglich ist, bestimmt und/oder optisch oder akustisch angezeigt wird.

## Claims

1. Cleaning apparatus (1), in particular a dishwasher, comprising a cleaning container (2) which provides a cleaning chamber (3) and is intended for receiving items to be cleaned, and a heat pump device (18) which has an evaporator (22) arranged within a heat storage medium tank (24), a temporary storage means (34) being arranged above the heat storage medium tank (24) and being intended for holding a liquid heat storage medium (25), which, owing to an increase in volume caused during operation of the heat pump device (18) by partial freezing of the contents of the heat storage medium tank (24), is displaced out of the heat storage medium tank (24), **characterised in that** the heat storage medium tank (24) is arranged at least largely below the cleaning container (2), and **in that** the temporary storage means (34) is arranged at least largely to the side of the cleaning container (2).

2. Cleaning apparatus according to claim 1, **characterised in that** the heat storage medium tank (24) has a volume of from 3 to 7 litres, in particular from 3.5 to 5.5 litres, and/or **in that** the temporary storage means (34) has a volume between 50 and 550 millilitres, in particular has a volume between 250 and 450 millilitres.

3. Cleaning apparatus according to either of the preceding claims, **characterised in that** the heat storage medium tank (24) and the temporary storage means (34) are formed in one piece or are interconnected via a displacement line (32).

4. Cleaning apparatus according to any of the preceding claims, **characterised in that** a transfer of the heat storage medium out of the heat storage medium tank (24) or the temporary storage means (34) into the cleaning container (2) is prevented.

5. Cleaning apparatus according to any of claims 1 to 3, **characterised in that** the heat storage medium tank (24) is fluidically connected both to a fresh water supply (13) and to an overflow line (31) opening into the cleaning container (2), the temporary storage means (34) being integrated into the overflow line (31) or arranged at the end of the displacement line (32).

6. Cleaning apparatus according to any of claims 1 to 3, **characterised in that** the heat storage medium tank (24) is connected to a fresh water supply (13) by the temporary storage means (34) being fluidically interposed.

7. Cleaning apparatus according to any of the preceding claims, **characterised in that** the temporary storage means (34) has insulation on the side thereof facing the cleaning container (2).

8. Cleaning apparatus according to any of the preceding claims, **characterised in that** the temporary storage means (34) is thermally conductively connected to the housing (36) of the cleaning apparatus (1).

9. Cleaning apparatus according to any of the preceding claims, **characterised in that** a fill level sensor (28), in particular a float switch or an optical sensor, is arranged in the temporary storage means (34) and/or in the displacement line (32).

10. Method for operating a cleaning apparatus according to any of the preceding claims, comprising a cleaning container (2) which provides a cleaning chamber (3), and a heat pump device (18) which has an evaporator (22) arranged within a heat storage medium tank (24), in which method, in a program step of a cleaning program, the liquid heat storage medium (25) stored in the heat storage medium tank (24) is cooled so intensively by operation of the heat pump device (18) that the heat storage medium (25) partially freezes, **characterised in that**, as a result, some of the heat storage medium (25) is displaced out of the heat storage medium tank (24) arranged largely below the cleaning container (2) into an temporary storage means (34) arranged above the heat storage medium tank (24) and at least largely to the side of the cleaning container (2).

11. Method according to claim 10, **characterised in that**, in a subsequent program step of the cleaning program or outside the cleaning program, the displaced partial amount of the heat storage medium (25) flows back into the heat storage medium tank (24) due to gravity.

12. Method according to either claim 10 or claim 11, **characterised in that** a fill level measurement is carried out in the temporary storage means (34) and/or in the displacement line (32), during which measurement it is in particular sensed whether a predetermined water level in the temporary storage means (34) and/or in the displacement line (32) has been reached or exceeded.

13. Method according to the preceding claim, **characterised in that** a fill level measurement is carried out immediately at the start of a rinsing program and/or at the beginning of a program step using cleaning solution to be heated.

14. Method according to either claim 12 or claim 13, **characterised in that**, depending on the fill level measurement, the heat pump device (18) is switched off or remains switched off in the rinsing program, and/or a point in time or a period of time after which operation of the heat pump device (18) is possible again is determined and/or visually or acoustically displayed.

## Revendications

1. Appareil de nettoyage (1), en particulier lave-vaisselle, comportant un récipient de nettoyage (2) fournissant un espace de nettoyage (3) et servant à contenir des articles à nettoyer, et un dispositif de pompe à chaleur (18) qui présente un évaporateur (22) disposé à l'intérieur d'un réservoir de fluide caloporteur (24),
un réservoir intermédiaire (34) étant disposé au-dessus du réservoir de fluide caloporteur (24) et servant à contenir du fluide caloporteur (25) qui est extrait du réservoir de fluide caloporteur (24) lors d'une augmentation de volume provoquée par la congélation partielle du contenu du réservoir de fluide caloporteur (24) pendant le fonctionnement du dispositif de pompe à chaleur (18),
**caractérisé en ce**
**que** le réservoir de fluide caloporteur (24) est au moins largement disposé sous le récipient de nettoyage (2),
et **que** le réservoir intermédiaire (34) est au moins largement disposé sur le côté du récipient de nettoyage (2).

2. Appareil de nettoyage selon la revendication 1,
**caractérisé en ce que**
le réservoir de fluide caloporteur (24) présente un volume de 3 à 7 litres, en particulier de 3,5 à 5,5 litres, et/ou **en ce que** le réservoir intermédiaire (34) présente un volume compris entre 50 et 550 millilitres, en particulier un volume compris entre 250 et 450 millilitres.

3. Appareil de nettoyage selon l'une des revendications précédentes,
**caractérisé en ce que**
le réservoir de fluide caloporteur (24) et le réservoir intermédiaire (34) sont formés d'une seule pièce ou sont reliés l'un à l'autre par une conduite de déplacement (32).

4. Appareil de nettoyage selon l'une des revendications précédentes,
**caractérisé en ce que**
un transfert de fluide caloporteur hors du réservoir de fluide caloporteur (24) ou du réservoir intermédiaire (34) dans le récipient de nettoyage (2) est exclu.

5. Appareil de nettoyage selon l'une des revendications 1 à 3,
**caractérisé en ce que**
le réservoir de fluide caloporteur (24) est raccordé fluidiquement à une alimentation en eau fraîche (13) d'une part et à une conduite de trop-plein (31) débouchant dans le récipient de nettoyage (2) d'autre part, le réservoir intermédiaire (34) étant intégré dans la conduite de trop-plein (31) ou disposé à l'extrémité de la conduite de déplacement (32).

6. Appareil de nettoyage selon l'une des revendications 1 à 3,
**caractérisé en ce que**
le réservoir de fluide caloporteur (24) est raccordé à une alimentation en eau fraîche (13) par l'intermédiaire d'une interposition fluidique du réservoir intermédiaire (34).

7. Appareil de nettoyage selon l'une des revendications précédentes,
**caractérisé en ce que**
le réservoir intermédiaire (34) présente une isolation sur sa face tournée vers le récipient de nettoyage (2).

8. Appareil de nettoyage selon l'une des revendications précédentes,
**caractérisé en ce que**
le réservoir intermédiaire (34) est relié au boîtier (36) de l'appareil de nettoyage (1) de façon thermoconductrice.

9. Appareil de nettoyage selon l'une des revendications précédentes,
**caractérisé en ce que**
un capteur de niveau (28), en particulier un interrupteur-flotteur ou un capteur optique, est disposé dans le réservoir intermédiaire (34) et/ou dans la conduite de déplacement (32).

10. Procédé permettant de faire fonctionner un appareil de nettoyage selon l'une des revendications précédentes, comportant un récipient de nettoyage (2) fournissant un espace de nettoyage (3) et un dispositif de pompe à chaleur (18) qui présente un évaporateur (22) disposé dans un réservoir de fluide caloporteur (24), pendant une étape de programme d'un programme de nettoyage, le fluide caloporteur (25) stocké dans le réservoir de fluide caloporteur (24) étant tellement refroidi par le fonctionnement du dispositif de pompe à chaleur (18) que le fluide caloporteur (25) gèle partiellement, **caractérisé en ce qu'**une partie du fluide caloporteur (25) est extraite du réservoir de fluide caloporteur (24) largement disposé sous le récipient de nettoyage (2) et envoyée dans un réservoir intermédiaire (34) disposé au-dessus du réservoir de fluide caloporteur (24) et au moins largement sur le côté du récipient de nettoyage (2).

11. Procédé selon la revendication 10,
**caractérisé en ce que**
la quantité partielle extraite du fluide caloporteur (25) reflue dans le réservoir de fluide caloporteur (24) par gravité pendant une étape de programme ultérieure du programme de nettoyage ou en dehors du programme de nettoyage.

12. Procédé selon la revendication 10 ou 11,
**caractérisé en ce que**
une mesure de niveau est effectuée dans le réservoir intermédiaire (34) et/ou dans la conduite de déplacement (32), laquelle mesure de niveau permettant de détecter en particulier si un niveau d'eau prédéterminé dans le réservoir intermédiaire (34) et/ou dans la conduite de déplacement (32) a été atteint ou dépassé.

13. Procédé selon la revendication précédente,
**caractérisé en ce qu'**une mesure de niveau est effectuée immédiatement au début d'un programme de lavage et/ou au début d'une étape de programme avec la solution de nettoyage à chauffer.

14. Procédé selon la revendication 12 ou 13, **caractérisé en ce que**, en fonction de la mesure de niveau, le dispositif de pompe à chaleur (18) est éteint ou reste éteint pendant le programme de lavage et/ou qu'un moment donné ou un intervalle de temps, après lequel le fonctionnement du dispositif de pompe à chaleur (18) est à nouveau possible, est déterminé et/ou affiché visuellement ou acoustiquement.
